# EUROPÄISCHE PATENTSCHRIFT

(11) **EP 3 402 635 B1**
(45) Veröffentlichungstag und Bekanntmachung des Hinweises auf die Patenterteilung: **23.10.2019**
(21) Anmeldenummer: 17700201.1
(22) Anmeldetag: 05.01.2017
(51) Int. Cl.: B25J 15/00

(54) **GREIFER MIT WENIGSTENS EINEM ADAPTIVEN GREIFERFINGER**
GRIPPER WITH AT LEAST ONE ADAPTIVE GRIPPER FINGER
DISPOSITIF DE PRÉHENSION COMPRENANT AU MOINS UN DOIGT DE PRÉHENSION ADAPTATIF

(30) Priorität: 15.01.2016 DE 102016200495
(43) Veröffentlichungstag der Anmeldung: 21.11.2018
(73) Patentinhaber: KUKA Deutschland GmbH, 86165 Augsburg (DE)
(72) Erfinder: BRUDNIOK, Sven, 86853 Langerringen (DE)
(74) Vertreter: Tillmann, Axel
(86) Internationale Anmeldenummer: PCT/EP2017/050229
(87) Internationale Veröffentlichungsnummer: WO 2017/121681

(56) Entgegenhaltungen:
- JP-A- H05 293 786
- JP-A- 2008 284 654
- JP-A- 2010 253 571
- JP-U- S4 897 868
- JP-U- S59 120 580

## Beschreibung

Die Erfindung betrifft einen Greifer, aufweisend einen Greifergrundkörper, wenigstens einen ersten Greiferfinger und wenigstens einen zweiten Greiferfinger, sowie ein Getriebe, das ausgebildet ist, den wenigstens einen ersten Greiferfinger und den wenigstens einen zweiten Greiferfinger relativ zueinander verstellbar am Greifergrundkörper zu lagern.

Aus der US 5,108,140 ist ein Greifer mit drei Fingern bekannt, von denen jeder Finger zwei schwenkbare Freiheitsgrade und einen drehbaren Freiheitsgrad aufweist. Die Finger sind asymmetrisch konfiguriert, derart, dass zwei Finger um versetzt zueinander angeordnete Drehachsen drehbar gelagert sind und der dritte Finger zu einer nicht versetzten Drehachse drehbar gelagert ist. Jedem Finger ist ein Antriebsmechanismus zugeordnet, um die Finger in ihren schwenkbaren Freiheitsgraden automatisch angetrieben bewegen zu können.

Die JP H05 293786 A zeigt eine Greifeinrichtung, wobei ein Greiffinger eine verstellbare V-förmige Aussparung aufweist.

Aus der JP S59 120580 U ist ein Greifer bekannt, welcher eine verstellbare Greifkontaktfläche aufweist.

In der JP S48 97868 U ist ebenso ein Greifer gezeigt, der verstellbare Greifkontaktflächen aufweist.

Aufgabe der Erfindung ist es, einen Greifer zu schaffen, der einfach und somit zuverlässig aufgebaut ist, insbesondere dadurch, dass seine Fingerspitzenstellungen passiv, d.h. antriebslos in Abhängigkeit des zu greifenden Objekts einstellbar sind.

Diese Aufgabe wird erfindungsgemäß gelöst durch einen Greifer, aufweisend einen Greifergrundkörper, wenigstens einen ersten Greiferfinger und wenigstens einen zweiten Greiferfinger, sowie ein Getriebe, das ausgebildet ist, den wenigstens einen ersten Greiferfinger und den wenigstens einen zweiten Greiferfinger relativ zueinander verstellbar am Greifergrundkörper zu lagern, wobei mindestens einer der ersten und zweiten Greiferfinger:
- einen Fingergrundkörper mit einem dem Greifergrundkörper zuweisenden Fingerbasisabschnitt und einem dem Fingerbasisabschnitt gegenüberliegenden Fingerendabschnitt aufweist,
- ein Fingermittelglied aufweist, das eine erste Greiffläche, eine erste Lagerstelle und eine zweite Lagerstelle umfasst, und das Fingermittelglied mit seiner ersten Lagestelle durch ein erstes Gelenk schwenkbar an dem Fingerbasisabschnitt des Fingergrundkörpers gelagert ist,
- ein Fingerspitzenglied aufweist, das eine zweite Greiffläche umfasst, und das Fingerspitzenglied an der zweiten Lagestelle des Fingermittelglieds durch ein zweites Gelenk schwenkbar an dem Fingermittelglied gelagert ist, und
- der Fingerendabschnitt ein Widerlager aufweist, an dem sich das Fingerspitzenglied derart abstützt, dass das Fingerspitzenglied sich entgegen der Schwenkrichtung des Fingermittelglied dreht, wenn das Fingermittelglied geschwenkt wird
und wobei das Widerlager eine Kippleiste aufweist, an der sich ein der zweiten Greiffläche gegenüberliegender Wandabschnitt des Fingerspitzenglieds derart anlegt, dass das Fingerspitzenglied sich aufgrund der Kippleiste um eine Kippachse dreht, wenn das Fingermittelglied geschwenkt wird.

Der Greifer ist insbesondere ausgebildet, als ein Endeffektor von einem Roboterarm getragen, bewegt und/oder angesteuert zu werden.

Roboterarme mit zugehörigen Robotersteuerungen, insbesondere Industrieroboter sind Arbeitsmaschinen, die zur automatischen Handhabung und/oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Roboterarm mit mehreren über Gelenke verbundene Glieder und programmierbare Robotersteuerungen (Steuervorrichtungen) auf, die während des Betriebs die Bewegungsabläufe des Roboterarms automatisch steuern bzw. regeln, um einen Roboterflansch des Roboterarms im Raum zu positionieren und zu bewegen. Die Glieder werden dazu über Antriebsmotoren, insbesondere elektrische Antriebsmotoren, die von der Robotersteuerung angesteuert werden, insbesondere bezüglich der Bewegungsachsen des Industrieroboters, welche die Bewegungsfreiheitsgrade der Gelenke repräsentieren, bewegt.

Der Roboter kann beispielsweise ein Industrieroboter sein, der insbesondere ein Knickarmroboter mit seriell aufeinander folgenden Drehachsen, beispielsweise sechs Drehachsen sein kann. Alternativ kann der Roboter ein SCARA-Roboter, d.h. ein horizontaler Gelenkarmroboter sein, welcher in der Regel vier Freiheitsgrade bzw. Achsen, d.h. Gelenke aufweist, von denen drei Gelenke Drehgelenke sein können und ein Gelenk ein Schubgelenk ist. Der Roboter kann aber auch ein sogenannter Leichtbauroboter sein, welcher insbesondere sieben seriell aufeinander folgende Drehachsen aufweisen kann.

Leichtbauroboter unterscheiden sich zunächst von üblichen Industrierobotern dadurch, dass sie eine für die Mensch-Maschine-Kooperation günstige Baugröße aufweisen und dabei eine zu ihrem Eigengewicht relativ hohe Tragfähigkeit aufweisen. Daneben können Leichtbauroboter insbesondere auch kraft- und/oder momentgeregelt statt lediglich positionsgeregelt betrieben werden, was beispielsweise eine Mensch-Roboter-Kooperation sicherer macht. Außerdem kann dadurch eine solche sichere Mensch-Maschine-Kooperation erreicht werden, dass beispielsweise unbeabsichtigte Kollisionen des Roboterarmes mit Personen, wie beispielsweise Werker und Monteure entweder verhindert oder zumindest derart abgeschwächt werden können, so dass den Personen bzw. Monteuren kein Schaden entsteht.

Ein solcher Roboterarm bzw. ein solcher Leichtbauroboter weist vorzugsweise mehr als sechs Freiheitsgrade auf, so dass insoweit ein überbestimmtes System geschaffen wird, wodurch derselbe Punkt im Raum in gleicher Orientierung in mehreren, insbesondere sogar unendlich vielen verschiedenen Posen des Roboterarms erreicht werden kann. Der Leichtbauroboter kann auf externe Krafteinwirkungen in geeigneten Weisen reagieren. Zur Kraftmessung können jeweils an den Gelenken angeordnete Drehmomentsensoren verwendet werden, die in mehreren Raumrichtungen Drehmomente und Kräfte erfassen bzw. messen können. Alternativ oder ergänzend können die externen Kräfte auch sensorlos, beispielsweise anhand der gemessenen Motorströme der Antriebe an den Gelenken des Leichtbauroboters abgeschätzt werden. Als Regelungskonzepte kann beispielsweise eine indirekte Kraftregelung durch Modellierung des Leichtbauroboters als mechanischer Widerstand (Impedanz) oder eine direkte Kraftregelung verwendet werden.

In gleicher Weise kann auch ein SCARA-Roboter über jeweils an den Gelenken angeordnete Drehmomentsensoren verfügen, die in mehreren Raumrichtungen Drehmomente und Kräfte erfassen bzw. messen können. Alternativ oder ergänzend können auch bei einem SCARA-Roboter die externen Kräfte sensorlos, beispielsweise anhand der gemessenen Motorströme der Antriebsmotoren an den Gelenken des SCARA-Roboters abgeschätzt werden.

Der Greifer weist mindestens zwei Greiferfinger auf. Die mindestens zwei Greiferfinger können mittels des Getriebes gegeneinander verstellt werden. Dies kann bedeuten, dass die mindestens zwei Greiferfinger aufeinander zu bewegt werden können, um den Greifer zu schließen, so dass ein Objekt gegriffen werden kann, und dass die mindestens zwei Greiferfinger voneinander weg bewegt werden können, um den Greifer zu öffnen, so dass ein Objekt wieder losgelassen werden kann.

Der vorherige Absatz beschreibt einen Außengriff. Der Greifer kann aber auch einen Innengriff ausführen. Dabei bewegen sich die Finger voneinander weg, bis sie das Greifobjekt mit beiden Fingern auf der Innenseite berühren und das Objekt so gegriffen werden kann. Wenn die Finger danach wieder aufeinander zu gefahren werden, wird das Objekt wieder losgelassen.

Der Greifer kann mehr als zwei Greiferfinger aufweisen. Um ein Öffnen und Schließen des Greifers zu erreichen, ist es prinzipiell ausreichend, wenn lediglich ein einziger Greiferfinger beweglich ausgebildet ist und mindestens ein weiterer Greiferfinger dabei starr am Greifergrundkörper befestigt sein kann. Es können jedoch auch zwei, mehr oder alle Greiferfinger beweglich ausgebildet sein. Das Getriebe kann wenigstens einen Antrieb aufweisen, so dass der wenigstens eine bewegliche Greiferfinger angetrieben, insbesondere automatisch bewegt werden kann. Indem der gattungsgemäße Greifer mindestens einen Greiferfinger aufweist, der:
- einen Fingergrundkörper mit einem dem Greifergrundkörper zuweisenden Fingerbasisabschnitt und einem dem Fingerbasisabschnitt gegenüberliegenden Fingerendabschnitt aufweist,
- ein Fingermittelglied aufweist, das eine erste Greiffläche, eine erste Lagerstelle und eine zweite Lagerstelle umfasst, und das Fingermittelglied mit seiner ersten Lagestelle durch ein erstes Gelenk schwenkbar an dem Fingerbasisabschnitt des Fingergrundkörpers gelagert ist,

- ein Fingerspitzenglied aufweist, das eine zweite Greiffläche umfasst, und das Fingerspitzenglied an der zweiten Lagestelle des Fingermittelglieds durch ein zweites Gelenk schwenkbar an dem Fingermittelglied gelagert ist, und
- der Fingerendabschnitt ein Widerlager aufweist, an dem sich das Fingerspitzenglied derart abstützt, dass das Fingerspitzenglied sich entgegen der Schwenkrichtung des Fingermittelglied dreht, wenn das Fingermittelglied geschwenkt wird, erhält der betreffende Greiferfinger eine antriebslose Beweglichkeit, so dass sich der Greiferfinger an beliebige Konturen von Objekten, die gegriffen werden sollen, anpassen kann, ohne dass es eines diesbezüglichen Antriebs und/oder einer diesbezüglichen Antriebssteuerung bedarf. So wird ein Greifer geschaffen, der einfach und zuverlässig aufgebaut ist, insbesondere dadurch, dass seine Fingerspitzenstellungen passiv, d.h. antriebslos in Abhängigkeit des zu greifenden Objekts einstellbar sind.

Greiferfinger, die einen Fingergrundkörper mit einem dem Greifergrundkörper zuweisenden Fingerbasisabschnitt und einem dem Fingerbasisabschnitt gegenüberliegenden Fingerendabschnitt aufweisen, und außerdem
- ein Fingermittelglied aufweisen, das eine erste Greiffläche, eine erste Lagerstelle und eine zweite Lagerstelle umfasst, und das Fingermittelglied mit seiner ersten Lagestelle durch ein erstes Gelenk schwenkbar an dem Fingerbasisabschnitt des Fingergrundkörpers gelagert ist,
- ein Fingerspitzenglied aufweisen, das eine zweite Greiffläche umfasst, und das Fingerspitzenglied an der zweiten Lagestelle des Fingermittelglieds durch ein zweites Gelenk schwenkbar an dem Fingermittelglied gelagert ist, wobei
- der Fingerendabschnitt ein Widerlager aufweist, an dem sich das Fingerspitzenglied derart abstützt, dass das Fingerspitzenglied sich entgegen der Schwenkrichtung des Fingermittelglied dreht, wenn das Fingermittelglied geschwenkt wird, werden erfindungsgemäß auch als adaptive Greiferfinger bezeichnet. Solche adaptiven Greiferfinger zeichnen sich dadurch aus, dass sie sich passiv, d.h. ohne einen aktiven Antrieb aufzuweisen, an unterschiedliche Umfangskonturen von zu greifenden Objekten anpassen können.

Der Fingergrundkörper kann eine insbesondere quaderförmige Grundplatte aufweisen, durch welche der Greiferfinger an dem Greifergrundkörper gelagert oder befestigt ist. Die Grundplatte kann Teil des Fingerbasisabschnitts sein oder die Grundplatte kann im Bereich des Fingerbasisabschnitts befestigt sein. Von der Grundplatte können sich zwei Schenkel wegerstrecken. Die beiden Schenkel können jeweils von einer flachen, schmalen Leiste gebildet werden. Die beiden Schenkel erstrecken sich parallel zueinander in einem Abstand. Die beiden Schenkel können auch über einen Steg miteinander verbunden sein und diese Verbindung bildet ein Gegenlager für das Fingermittelglied. Der Abstand zwischen den Stegen bestimmt sich aus der Breite des Fingermittelglieds, derart, dass das Fingermittelglied an seinen gegenüberliegenden Seiten von den beiden Schenkeln bündig angrenzend eingefasst wird. Der Fingerbasisabschnitt kann insoweit von den beiden proximalen, d.h. von den Greifergrundkörper nahen Enden der beiden Schenkel gebildet werden. Jedes dieser beiden Enden kann beispielsweise eine Bohrung aufweisen, durch welche Bohrungen ein Stift oder eine Achse gesteckt ist, welche eine erste Lagerstelle für das Fingermittelglied bildet, derart, dass das Fingermittelglied zwischen den beiden Schenkeln schwenkbar am Fingergrundkörper gelagert ist. Jeder Schenkel kann eine solche Freisparung aufweisen, so dass in einem maximal eingeschwenktem Zustand des Fingermittelglieds die Ränder der Schenkel nicht über die Seitenkanten des Fingermittelglieds vorspringen, und somit ein zu greifendes Objekt auch in dem maximal eingeschwenktem Zustand des Fingermittelglieds durch die erste Greiffläche des Fingermittelglieds gegriffen wird und nicht durch die Schenkel des Fingergrundkörpers. Der Fingergrundkörper kann auch so gestaltet sein, dass die gegenüberliegenden Segmente, d.h. das Fingermittelglied und das Fingerendglied seitlich nicht eingefasst werden.

Das Fingermittelglied kann eine quaderförmige Grundgestalt aufweisen, die in Art einer Leiste ausgebildet ist, derart, dass die erste Greiffläche von einer der beiden größtflächigen Seitenwände des Quaders gebildet wird, die erste Lagerstelle im Bereich der einen Stirnseite der längsten Längserstreckung des Quaders angeordnet ist, wobei das erste Gelenk mit seiner Schwenkachse parallel zur Greiffläche ausgerichtet ist, und die zweite Lagerstelle im Bereich der anderen, der einen Stirnseite gegenüberliegenden Stirnseite der längsten Längserstreckung des Quaders angeordnet ist, wobei das zweite Gelenk mit seiner Schwenkachse parallel zur ersten Greiffläche ausgerichtet ist.

Das Fingerspitzenglied kann eine quaderförmige Grundgestalt aufweisen, die in Art eines Quadersteins ausgebildet ist, derart, dass die zweite Greiffläche von einer der beiden größtflächigen Seitenwände des Quadersteins gebildet wird, der Quaderstein an der zweiten Lagerstelle des Fingermittelglieds schwenkbar gelagert ist, wobei das zweite Gelenk mit seiner Schwenkachse parallel zur zweiten Greiffläche ausgerichtet ist.

Das Widerlager kann sich parallel zum ersten Gelenk und parallel zum zweiten Gelenk zwischen den beiden Schenkeln erstrecken.

Das Widerlager weist erfindungsgemäß eine Kippleiste auf, an der sich ein der zweiten Greiffläche gegenüberliegender Wandabschnitt des Fingerspitzenglieds derart anlegt, dass das Fingerspitzenglied auf der Kippleiste gleitet und sich so um eine Drehachse zum Fingermittelglied dreht, wenn das Fingermittelglied geschwenkt wird.

Die Kippleiste kann insoweit eine scharfe Kante aufweisen, welche eine Schenkachse definiert, um die das Fingerspitzenglied schwenkt. Der der zweiten Greiffläche gegenüberliegende Wandabschnitt des Fingerspitzenglieds liegt dabei lediglich berührend auf der Kippleiste, insbesondere auf der scharfen Kante auf. Insbesondere kann der Wandabschnitt des Fingerspitzenglieds ggf. über die Kippleiste, insbesondere die scharfe Kante während des Schwenkens des Fingerspitzenglieds entlanggleiten.

Die Mechanik, die aus den drei Segmenten Fingergrundkörper, Fingermittenglied und Fingerspitzenglied besteht, kann über einen Freiheitsgrad verfügen, unter der Bedingung, dass das Fingerspitzenglied immer Kontakt zum Wiederlager hat, wie dies z.B. über eine Feder erreicht werden kann. Dieser eine Freiheitsgrad kann z.B. dadurch erreicht werden, dass das Fingermittenglied einwertig im ersten Gelenk gelagert ist und das Fingerspitzenglied einwertig am Fingermittenglied gelagert ist und der sich dadurch ergebende Längenausgleich beim Einschwenken vom Fingermittenglied über ein gleiten des Fingerspitzenglieds auf dem Wiederlager ermöglicht wird. Dieser eine Freiheitsgrad kann weiterhin dadurch erreicht werden, dass das Fingerspitzenglied einwertig am Fingergrundkörper gelagert ist und der sich beim Einschwenken ergebende Längenausgleich durch ein zweiwertiges Lager in der ersten oder der zweiten Lagerung vom Fingermittenglied ausgeglichen wird, das jeweils andere Gelenk im Fingermittenglied ermöglicht eine einwertige Rotation. Dieser eine Freiheitsgrad der Mechanik ermöglicht eine Adaption an die Oberfläche des Greifobjektes. Diese Anpassung wird durch die Greifkräfte zwischen Greifobjektoberfläche und berührenden Fingergliedern ausgelöst. Nach der Anpassung der Fingerglieder an die Oberfläche des Greifobjektes ist die Fingermechanik statisch bestimmt. Damit ist die Position des gegriffenen Objektes eindeutig.

Die Kippleiste kann eine sich parallel zum ersten Gelenk und parallel zum zweiten Gelenk erstreckende Kippkante aufweisen.

Die Kippleiste kann von einem sich parallel zum ersten Gelenk und parallel zum zweiten Gelenk erstreckenden Kreiszylinderstift gebildet werden.

Die Kippleiste kann von einer sich parallel zum ersten Gelenk und parallel zum zweiten Gelenk erstreckenden, gewölbten Fläche, z.B. einer elliptischen Fläche gebildet werden.

An dem Kreiszylinderstift kann sich der der zweiten Greiffläche gegenüberliegende Wandabschnitt des Fingerspitzenglieds derart anlegen, dass das Fingerspitzenglied sich aufgrund des Kreiszylinderstifts virtuell um dessen Zylinderachse dreht und/oder bezüglich dieser entlang gleitet, wenn das Fingermittelglied geschwenkt wird. Der der zweiten Greiffläche gegenüberliegende Wandabschnitt des Fingerspitzenglieds liegt dabei lediglich berührend auf der Mantelwand des Kreiszylinderstifts auf. Insbesondere kann der Wandabschnitt des Fingerspitzenglieds ggf. über die Mantelwand des Kreiszylinderstifts entlanggleiten.

Die Kippleiste, insbesondere die Kippkante oder der Kreiszylinderstift, kann am Fingergrundkörper in einem solchen Abstand vom zweiten Gelenk angeordnet sein, dass eine bezüglich der Kippachse in Richtung des zweiten Gelenks weisende erste Hebellänge des Fingerspitzenglieds kleiner ist, als eine von der Kippachse ausgehende zweite Hebellänge des Fingerspitzenglieds, die von dem zweiten Gelenk weg weist.

Die Kippleiste, insbesondere die Kippkante oder der Kreiszylinderstift, teilt insoweit das Fingerspitzenglied in eine erste Hebellänge und eine zweite Hebellänge auf. Das Fingermittelglied betätigt somit unmittelbar den kürzeren Teil des Fingerspitzenglieds und der längere Teil des Fingerspitzenglieds ist demgemäß frei schwenkbar und bewegt sich in Richtung des Objekts, wenn sich der Greiferfinger gegen das Objekt schließt.

In einer Variante, die nicht Teil der Erfindung ist, kann beispielsweise das Widerlager ein Drehlager sein, durch welches das Fingerspitzenglied am Fingergrundkörper schwenkbar gelagert ist, wobei das erste Gelenk zwei Freiheitsgrade aufweist und zwar einen Freiheitsgrad in Art eines Drehgelenks, zur Realisierung der Schwenkbarkeit des Fingermittelglieds an dem Fingergrundkörper und einen zweiten Freiheitsgrad in Art eines Schiebelagers, zum Ausgleich der Verstellung des zweiten Gelenks aufgrund der Drehung des Fingerspitzenglieds um das Widerlager, wobei das zweite Gelenk einen einzigen Freiheitsgrad aufweist.

Das beispielhafte Drehlager ist insoweit als ein einwertiges Lager ausgeführt, so dass außer der Schwenkbarkeit des Fingerspitzenglieds bezüglich des Fingergrundkörpers keine weitere Relativbewegung zwischen Fingerspitzenglied und Fingergrundkörper möglich ist. Da in dieser Ausführungsform auch das zweite Gelenk als ein einwertiges Lager ausgeführt, so dass außer der Schwenkbarkeit des Fingerspitzenglieds bezüglich des Fingermittelglieds keine weitere Relativbewegung zwischen Fingerspitzenglied und Fingermittelglied möglich ist, muss zur Realisierung eines Längenausgleichs das erste Gelenk zwei Freiheitsgrade aufweisen.

Das Widerlager kann beispielhaft ein Drehlager sein, durch welches das Fingerspitzenglied am Fingergrundkörper schwenkbar gelagert ist, wobei das zweite Gelenk zwei Freiheitsgrade aufweist und zwar einen Freiheitsgrad in Art eines Drehgelenks, zur Realisierung der Schwenkbarkeit des Fingerspitzenglied an dem Fingermittelglied und einen zweiten Freiheitsgrad in Art eines Schiebelagers, zum Ausgleich der Verstellung des zweiten Gelenks aufgrund der Drehung des Fingerspitzenglieds um das Widerlager, wobei das erste Gelenk einen einzigen Freiheitsgrad aufweist.

Das beispielhafte Drehlager ist insoweit als ein einwertiges Lager ausgeführt, so dass außer der Schwenkbarkeit des Fingerspitzenglieds bezüglich des Fingergrundkörpers keine weitere Relativbewegung zwischen Fingerspitzenglied und Fingergrundkörper möglich ist. Da in dieser Ausführungsform auch das erste Gelenk als ein einwertiges Lager ausgeführt, so dass außer der Schwenkbarkeit des Fingermittelglieds bezüglich des Fingergrundkörpers keine weitere Relativbewegung zwischen Fingermittelglied und Fingergrundkörper möglich ist, muss zur Realisierung eines Längenausgleichs das zweite Gelenk zwei Freiheitsgrade aufweisen.

In allen Ausführungsformen kann der Fingergrundkörper eine Anlagefläche aufweisen, die am Fingergrundkörper derart angeordnet und ausgerichtet ist, dass ein der zweiten Greiffläche gegenüberliegender Wandabschnitt des Fingerspitzenglieds auf der Anlagefläche aufliegt, wenn das Fingerspitzenglied zu dem Fingermittelglied sich in seiner Nullstellung befindet.

In allen Ausführungsformen kann die Nullstellung dadurch definiert sein, dass der Fingergrundkörper und das Fingerspitzenglied derart zueinander ausgerichtet sind, dass die erste Greiffläche und die zweite Greiffläche sich in einer gemeinsamen Ebene erstrecken.

In alternativen Ausführungsformen kann die Nullstellung aber auch dadurch definiert sein, dass der Fingergrundkörper und das Fingerspitzenglied derart zueinander ausgerichtet sind, dass die erste Greiffläche und die zweite Greiffläche einen bestimmten, vorgegebenen Winkel zueinander aufweisen.

Wenn das Fingerspitzenglied zu dem Fingermittelglied derart ausgerichtet ist, dass die erste Greiffläche und die zweite Greiffläche sich in einer gemeinsamen Ebene erstrecken, dann ist es vorzugsweise vorgesehen, dass der der zweiten Greiffläche gegenüberliegender Wandabschnitt des Fingerspitzenglieds sowohl auf der Anlagefläche als auch an dem Widerlager aufliegt, so dass das Fingerspitzenglied sich stabil gegen den Fingergrundkörper abstützt.

In allen Ausführungsformen kann der Fingergrundkörper an einer dem Fingermittelglied gegenüberliegenden Fingergrundkörperaußenwand eine dritte Greiffläche aufweisen.

Indem der Fingergrundkörper an einer dem Fingermittelglied gegenüberliegenden Fingergrundkörperaußenwand eine dritte Greiffläche aufweisen, kann ein Objekt in einem Innengriff gehalten werden. Dies bedeutet, dass das Objekt durch die Greiferfinger nicht mittels einer Schließbewegung an einer Außenoberfläche des Objekts gefasst wird, sondern mittels einer Öffnungsbewegung an wenigstens einer Innenfläche des Objekts. Dies kann beispielsweise der Fall sein, wenn das Objekt ein Hohlzylinder ist, bei dem die Greiferfinger in den Hohlraum des Hohlzylinders eindringen, sich nach außen bewegen, d.h. die Greiferfinger öffnen und sich gegen die innere Mantelwand des Hohlraums verspannen.

Die zweite Greiffläche kann eine Kerbe aufweisen, insbesondere eine sich parallel zum ersten Gelenk und parallel zum zweiten Gelenk erstreckende Kerbe aufweisen.

Zwei gegenüberliegende, zueinander zugeordnete Kerben zweier Greiferfinger können einen sogenannten Pinzettengriff vereinfachen. Ein Pinzettengriff ist grundsätzlich unabhängig von den Kerben möglich. Die Kerben ermöglichen allerdings eine eindeutige Positionierung eines konvexen Greifobjekts. Jede Kerb kann beispielsweise von einer im Querschnitt V-förmigen Nut im Fingerspitzenglied gebildet werden. Zwei solche gegenüberliegende V-förmige Nuten können beispielsweise ein im Querschnitt kreisförmiges oder ovales, stäbchenförmiges Objekt sicher greifen.

In allen Ausführungsformen kann der Fingergrundkörper eine Kerbe aufweisen. Die Kerbe kann sich dabei parallel zum ersten Gelenk und parallel zum zweiten Gelenk erstrecken.

Jede Kerbe des Fingergrundkörpers und/oder jede Kerbe des Fingerspitzenglieds kann generell an einem weit außen liegenden, d.h. distalen Ende des Greiferfingers angeordnet sein. Indem jede Kerbe des Fingergrundkörpers und/oder jede Kerbe des Fingerspitzenglieds an einem weit außen liegenden, d.h. distalen Ende des Greiferfingers angeordnet ist, können auch kleine stabförmige Objekte, die auf einem ebenen Untergrund aufliegen, sicher gegriffen werden.

Mindestens eine Kerbe kann schräg zur Fingerlängsachse angeordnet sein. Dies kann so erfolgen, dass die Länge der Kerbe klein ist und zwei Kerben der beiden Finger zueinander parallel sind. Diese Anordnung von Kerben ermöglicht u.a. einen Innengriff beispielsweise eines kleinen Ringes.

Generell können das Fingermittelglied und/oder das Fingerspitzenglied beliebige Konturen aufweisen. Insoweit ist die Gestalt des Fingermittelglieds und/oder des Fingerspitzenglieds beliebig anpassbar. Die Kontur kann einem gewünschten Greifobjekt angepasst gestaltet sein. Die Kontur des Fingermittelglieds und/oder des Fingerspitzenglieds kann insoweit einem Abschnitt der Außenkontur oder der Innenkontur des Objekts entsprechen. Die Kontur kann insbesondere ausgebildet sein, um das Objekt formschlüssig festhalten zu können. Die Kontur kann aber auch derart ausgebildet und/oder ausgerichtet sein, dass unterschiedliche Griffarten und/oder Greiforientierungen möglich sind. Dies bewirkt, dass das Objekt, wenn es von den Greiferfingern gehalten ist, eine eindeutige, reproduzierbare Position und Orientierung bezüglich des Fingergrundkörpers bzw. bezüglich des Greifergrundkörpers einnimmt. Dies bedeutet, dass auch gegebenenfalls angreifende externe Kräfte, die von außerhalb des Greifers auf das gegriffene Objekt einwirken, keine Verlagerung und/oder Verschiebung des Objekts zwischen den greifenden Greiferfingern verursachen können. So können mittels eines derartigen Greifers die Objekte formschlüssig gegriffen und somit stets eindeutig und präzise positioniert werden, beispielsweise auch um Fügeaufgaben durchführen zu können. Ein Merkmal einer bestimmten Kontur ist eine Kerbe, wie beschrieben.

In allen Ausführungsformen kann der Fingergrundkörper einen Schwenkanschlag aufweisen, der ausgebildet ist, ein Einschwenken des Fingermittelglieds in Richtung des Fingergrundkörpers auf einen vorgegebenen Höchstschwenkwinkel zu begrenzen.

Das Fingermittelglied und das Fingerspitzenglied kann demgemäß unter Bildung eines einzigen passiven Freiheitsgrades an dem Fingergrundkörper gelagert sein und der Greifer dabei ausgebildet sein, ein Schwenken des Fingermittelglieds und/oder des Fingerspitzenglieds derart zu begrenzen, dass in einer Stellung des Fingermittelglieds und/oder des Fingerspitzenglieds, in der ein Objekt durch den Greifer gegriffen ist, der einzige passive Freiheitsgrad beseitigt und/oder festgelegt ist. Eine solche Ausgestaltung stellt sicher, dass ein gegriffenes Objekt in seinem gegriffenen Zustand eine eindeutige Position und Orientierung bezüglich des Fingergrundkörpers und/oder bezüglich des Greifergrundkörpers einnimmt.

Auch in der Ausführungsform des Greiferfingers mit Schwenkanschlag, kann der Fingergrundkörper zwei Schenkel aufweisen, die jeweils von einer flachen, schmalen Leiste gebildet werden. Die beiden Schenkel erstrecken sich auch hier parallel zueinander in einem Abstand. Der Abstand bestimmt sich aus der Breite des Fingermittelglieds, derart, dass das Fingermittelglied an seinen gegenüberliegenden Seiten von den beiden Schenkeln bündig angrenzend eingefasst wird. Die Schenkel müssen nicht zwingend vorhanden sein. Wenn der Finger insgesamt etwas breiter ist, geht es in Bezug auf die Festigkeit auch ohne die Schenkel. Nur für die Aufnahme der oberen Drehachse muss etwas vorgesehen werden. Der Fingerbasisabschnitt kann insoweit von den beiden proximalen, d.h. von den Greifergrundkörper nahen Enden der beiden Schenkel gebildet werden. Jedes dieser beiden Enden kann beispielsweise eine Bohrung aufweisen, durch welche Bohrungen ein Stift oder eine Achse gesteckt ist, welche eine erste Lagerstelle für das Fingermittelglied bildet, derart, dass das Fingermittelglied zwischen den beiden Schenkeln schwenkbar am Fingergrundkörper gelagert ist. Jeder Schenkel kann eine solche Freisparung aufweisen, so dass in einem maximal eingeschwenktem Zustand des Fingermittelglieds die Ränder der Schenkel nicht über die Seitenkanten des Fingermittelglieds vorspringen, und somit ein zu greifendes Objekt auch in dem maximal eingeschwenktem Zustand des Fingermittelglieds durch die erste Greiffläche des Fingermittelglieds gegriffen wird und nicht durch die Schenkel des Fingergrundkörpers. Der maximal eingeschwenkte Zustand des Fingermittelglieds wird dabei durch den Schwenkanschlag definiert. Der Schwenkanschlag kann beispielsweise von einem Querriegel gebildet werden, welcher sich von einem Schenkel zum anderen Schenkel des Fingergrundkörpers erstreckt und zwar rückseitig des Fingermittelglieds, d.h. hinter der Rückwand des Fingermittelglieds, welche Rückwand am Fingermittelglied der ersten Greiffläche gegenüberliegt.

In allen Ausführungsformen kann das Fingerspitzenglied federvorgespannt gelagert sein und zwar federvorgespannt in einer Lage des Fingerspitzenglieds, in der das Fingerspitzenglied zu dem Fingermittelglied derart ausgerichtet ist, dass die erste Greiffläche und die zweite Greiffläche sich in einer gemeinsamen Ebene erstrecken, oder in einer Winkellage zueinander ausgerichtet sind, die in dieser Konfiguration der Nullstellung entsprechen.

Wenn sich die erste Greiffläche und die zweite Greiffläche in einer gemeinsamen Ebene erstrecken, dann befindet sich sowohl das Fingermittelglied als auch das Fingerspitzenglied in einer nicht verschwenkten Grundstellung. In dieser Grundstellung können die erste Greiffläche des Fingermittelglieds und die zweite Greiffläche des Fingerspitzenglieds eine gemeinsame ebene Greiffläche bilden. Wird ein Objekt derart gegriffen, dass das Fingermittelglied nach innen, d.h. in Richtung des Fingergrundkörpers geschwenkt wird, so schwenkt das distale Ende des Fingerspitzenglieds auf das Objekt zu. Wenn das Fingerspitzenglied auf das Objekt zu geschwenkt ist, dann ist das am Fingerspitzenglied angreifendes Federmittel vorgespannt, so dass nach einem Loslassen des Objekts das Fingerspitzenglied selbststätig wieder in seine Grundstellung zurückschwenkt. Das Federmittel kann beispielsweise eine zwischen dem Fingergrundkörper und dem Fingerspitzenglied eingekoppelte Federwendel sein. Das Federmittel kann in einer anderen Ausführungsvariante beispielsweise eine zwischen dem Fingermittelglied und dem Fingerspitzenglied eingekoppelte Blattfeder sein.

In allen Ausführungsformen können an jedem Greiferfinger mindestens eine adaptive Greiferfingermechanik bestehend aus Fingergrundkörper, Fingermittelglied und Fingerspitzenglied angebracht sein. Im Speziellen können beispielsweise in einem Greiferfinger zwei sich gespiegelt gegenüberliegende adaptive Greiferfingermechaniken angebracht sein, die sich gemeinsam einen Fingergrundkörper teilen.

In allen Ausführungsformen kann das Fingermittelglied eine quaderförmige Grundgestalt aufweisen, die in Art einer Leiste ausgebildet ist, derart, dass die erste Greiffläche von einer der beiden größtflächigen Seitenwände des Quaders gebildet wird, die erste Lagerstelle im Bereich der einen Stirnseite der längsten Längserstreckung des Quaders angeordnet ist, wobei das erste Gelenk mit seiner Schwenkachse parallel zur Greiffläche ausgerichtet ist, und die zweite Lagerstelle im Bereich der anderen, der einen Stirnseite gegenüberliegenden Stirnseite der längsten Längserstreckung des Quaders angeordnet ist, wobei das zweite Gelenk mit seiner Schwenkachse parallel zur Greiffläche ausgerichtet ist.

In allen entsprechenden Ausführungsformen können wahlweise eines, mehrere oder alle der folgenden Elemente von erster Lagerstelle, erstes Gelenk, zweite Lagerstelle, zweites Gelenk und/oder Widerlager als ein Festkörpergelenk ausgebildet sein.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Ansicht eines Industrieroboters in Art eines Sechsachs-Knickarmroboters;
- Fig. 2: eine perspektivische Ansicht eines Roboters in Art eines Leichtbauroboters;
- Fig. 3: eine perspektivische Ansicht eines Roboters in Art eines SCARA-Roboters;
- Fig. 4: eine perspektivische Darstellung eines beispielhaften Greifers, der erfindungsgemäße Greiferfinger aufweist;
- Fig. 5: eine perspektivische Darstellung eines erfindungsgemäßen Greiferfingers in einer repräsentativen beispielhaften Ausführungsform in Alleinstellung;
- Fig. 6: eine schematische Darstellung des Greiferfingers gemäß Fig. 5 in seiner Grundstellung;
- Fig. 7: eine schematische Darstellung des Greiferfingers gemäß Fig. 5 in einem Höchstschwenkwinkel des Fingermittelglieds in seiner Anschlagstellung;
- Fig. 8: eine schematische Darstellung des Greiferfingers gemäß Fig. 5 in einer Pinzettengriffanordnung;
- Fig. 9: eine schematische Darstellung des Greiferfingers gemäß Fig. 5 mit einem quaderförmigen Objekt zum Greifen;
- Fig. 10: eine schematische Darstellung des Greiferfingers gemäß Fig. 5 mit einem kugelförmigen oder kreiszylindrischen Objekt zum Greifen;
- Fig. 11: eine schematische Darstellung des Greiferfingers gemäß Fig. 5 mit einem im Querschnitt ovalen Objekt zum Greifen;
- Fig. 12: eine schematische Darstellung des Greiferfingers gemäß Fig. 5 mit einem quaderförmigen Objekt, das an seinen kurzen Seitenflächen umgreifend zu greifen ist;
- Fig. 13: eine schematische Darstellung des Greiferfingers gemäß Fig. 5 in einer Anordnung für einen Griff mit der Seite vom Fingergrundköper, der dem Fingermittelglied und dem Fingerspitzenglied gegenüber liegt;
- Fig. 14a: eine schematische Darstellung des Greiferfingers gemäß Fig. 5 mit einem federvorgespannten Fingerspitzenglied;
- Fig. 14b: eine perspektivische Teilansicht des Greifers mit zwei Greiferfingern, die jeweils mit wenigstens einer schräg verlaufenden Kerbe versehen sind;
- Fig. 15: eine schematische Darstellung einer ersten Konfiguration eines Greifers mit einem erfindungsgemäßen adaptiven Greiferfinger und einem in sich starren Greiferfinger;
- Fig. 16: eine schematische Darstellung einer zweiten Konfiguration eines Greifers mit zwei erfindungsgemäßen adaptiven Greiferfingern;
- Fig. 17: eine schematische Darstellung einer dritten Konfiguration eines Greifers mit einem Greiferfinger, der auf beiden Seiten mit der erfindungsgemäßen adaptiven Greiferkinematik versehen ist und einem starren Greiferfinger;
- Fig. 18: eine schematische Darstellung einer vierten Konfiguration eines Greifers mit zwei Greiferfingern, die auf beiden Seiten mit der erfindungsgemäßen adaptiven Greiferkinematik versehen sind;
- Fig. 19: eine schematische Darstellung einer fünften Konfiguration eines Greifers mit einem erfindungsgemäßen adaptiven Greiferfinger und einem starren Greiferfinger, wobei beide Greiferfinger schwenkbar am Greifergrundkörper gelagert sind;
- Fig. 20: eine schematische Darstellung einer sechsten Konfiguration eines Greifers mit zwei erfindungsgemäßen adaptiven Greiferfingern, die beide schwenkbar am Greifergrundkörper gelagert sind;
- Fig. 21a: eine schematische Darstellung einer ersten Variante eines beispielhaft alternativen. adaptiven Greiferfingers mit einem Schiebelager am ersten Gelenk in einer Grundstellung, welche Variante nicht Teil der Erfindung ist;
- Fig. 21b: eine schematische Darstellung einer ersten Variante eines beispielhaft alternativen adaptiven Greiferfingers mit einem Schiebelager am ersten Gelenk in einem Höchstschwenkwinkel des Fingermittelglieds in seiner Anschlagstellungm welche Variante nicht Teil der Erfindung ist;

- Fig. 22a: eine schematische Darstellung einer ersten Variante eines beispielhaft alternativen adaptiven Greiferfingers mit einem Schiebelager am zweiten Gelenk in einer Grundstellung, welche Variante nicht Teil der Erfindung ist; und
- Fig. 22b: eine schematische Darstellung einer ersten Variante eines beispielhaft alternativen adaptiven Greiferfingers mit einem Schiebelager am zweiten Gelenk in einem Höchstschwenkwinkel des Fingermittelglieds in seiner Anschlagstellung, welche Variante nicht Teil der Erfindung ist.

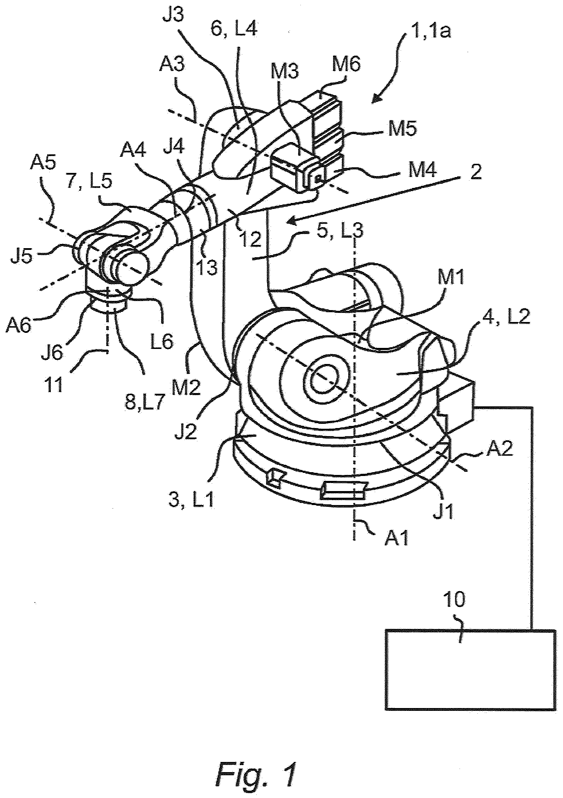

Die Fig. 1 zeigt einen Roboter 1, der einen Roboterarm 2 und eine Robotersteuerung 10 aufweist. Der Roboterarm 2 umfasst im Falle des vorliegenden Ausführungsbeispiels mehrere, nacheinander angeordnete und mittels Gelenke J1 bis J6 drehbar miteinander verbundene Glieder L1 bis L7.

Die Robotersteuerung 10 des Roboters 1 ist ausgebildet bzw. eingerichtet, ein Roboterprogramm auszuführen, durch welches die Gelenke J1 bis J6 des Roboterarms 2 gemäß des Roboterprogramms automatisiert oder in einem Handfahrbetrieb automatisch verstellt bzw. drehbewegt werden können. Dazu ist die Robotersteuerung 10 mit ansteuerbaren elektrischen Motoren M1 bis M6 verbunden, die ausgebildet sind, die Gelenke J1 bis J6 des Roboters 1 zu verstellen.

Bei den Gliedern L1 bis L7 handelt es sich im Falle des vorliegenden Ausführungsbeispiels eines Industrieroboters 1a um ein Gestell 3 und ein relativ zum Gestell 3 um eine vertikal verlaufende Achse A1 drehbar gelagertes Karussell 4. Weitere Glieder des Roboterarms 2 sind eine Schwinge 5, ein Armausleger 6 und eine vorzugsweise mehrachsige Roboterhand 7 mit einer als Werkzeugflansch 8 ausgeführten Befestigungsvorrichtung zum Befestigen eines erfindungsgemäßen Greifers 11. Die Schwinge 5 ist am unteren Ende, d.h. an dem Gelenk J2 der Schwinge 5, das auch als Schwingenlagerkopf bezeichnet werden kann, auf dem Karussell 4 um eine vorzugsweise horizontale Drehachse A2 schwenkbar gelagert.

Am oberen Ende der Schwinge 5 ist an dem ersten Gelenk J3 der Schwinge 5 wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6. Die Gelenke J1 bis J6 sind durch jeweils einen der elektrischen Motoren M1 bis M6 über die Robotersteuerung 10 programmgesteuert antreibbar. Generell kann dazu zwischen jedem der Glieder L1 bis L7 und dem jeweils zugeordneten elektrischen Motoren M1 bis M6 ein Getriebe vorgesehen sein. Im Falle des in Fig. 1 gezeigten Ausführungsbeispiels ist das Glied L7 als ein Werkzeugflansch ausgebildet, zum Befestigen eines erfindungsgemäßen Greifers 11.

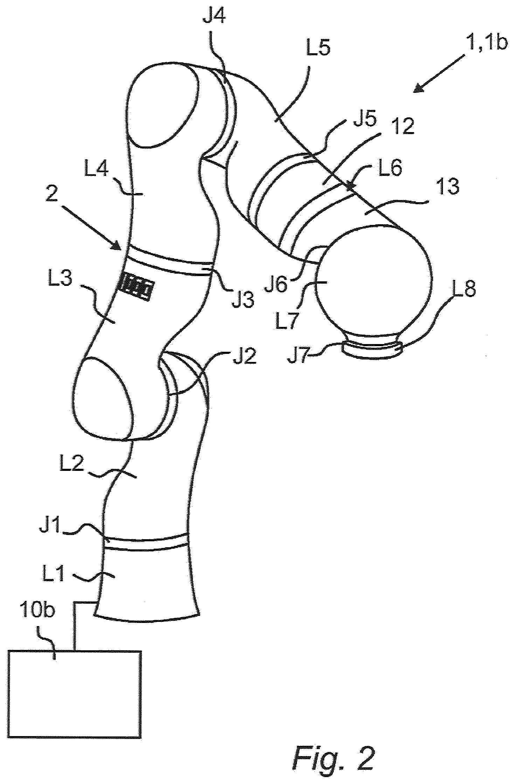

Die Fig. 2 zeigt einen Roboter 1 in einer beispielhaften Ausführung als ein so genannter Leichtbauroboter 1b, der einen Roboterarm 2 und eine Robotersteuerung 10b aufweist. Der Roboterarm 2 umfasst im Falle des vorliegenden Ausführungsbeispiels acht, nacheinander angeordnete und mittels Gelenke J1-J7 drehbar miteinander verbundene Glieder L1-L8. Im Falle des in Fig. 2 gezeigten Ausführungsbeispiels ist das Glied L8 als ein Werkzeugflansch ausgebildet, zum Befestigen eines erfindungsgemäßen Greifers 11.

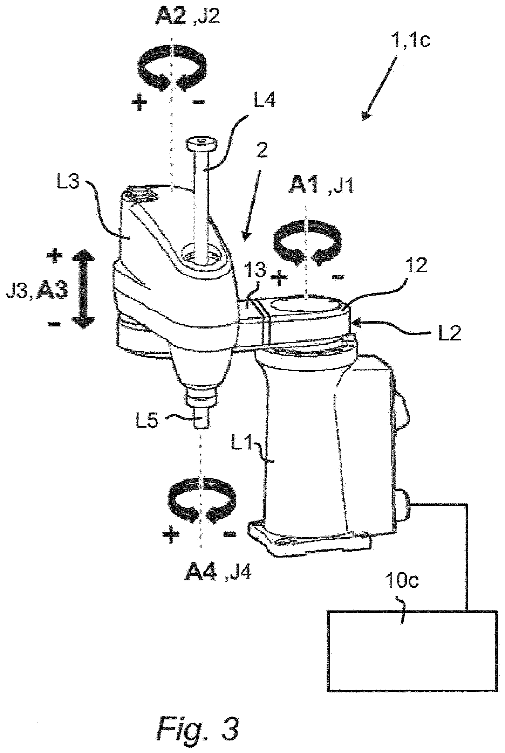

Die Fig. 3 zeigt einen Roboter 1 in einer beispielhaften Ausführung als ein so genannter SCARA-Roboter 1c, der einen Roboterarm 2 und eine Robotersteuerung 10c aufweist. Der Roboterarm 2 umfasst im Falle des vorliegenden Ausführungsbeispiels fünf, nacheinander angeordnete und mittels Gelenke J1-J4 drehbar miteinander verbundene Glieder L1-L5. Im Falle des in Fig. 3 gezeigten Ausführungsbeispiels ist das Glied L5 als ein Werkzeugflansch ausgebildet, zum Befestigen eines erfindungsgemäßen Greifers 11.

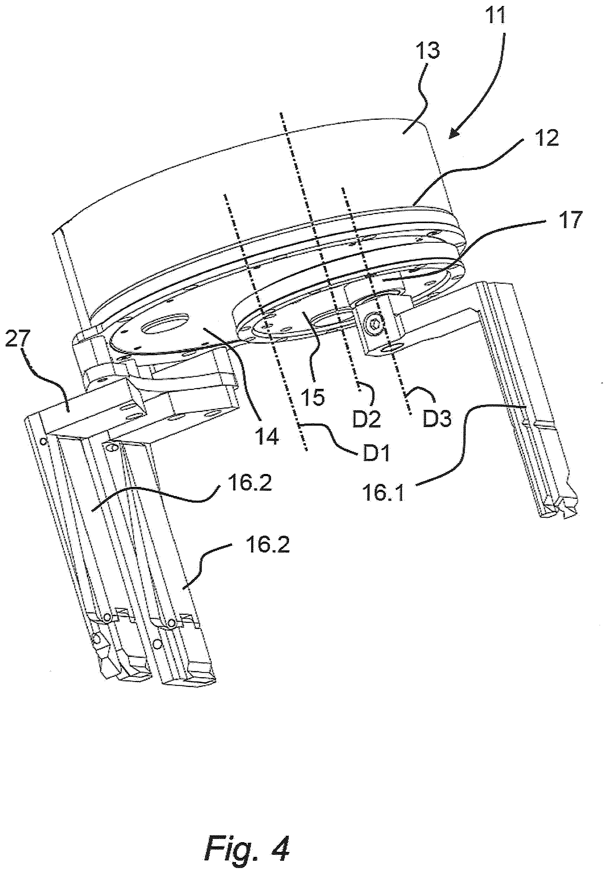

In den Figuren 4 bis 22b sind beispielhafte Ausführungsformen des erfindungsgemäßen Greifers 11 gezeigt.

Der beispielhafte Greifer 11 weist einen Greifergrundkörper 12 auf, der einen Anschlussflansch 13 umfasst, der zur Befestigung des Greifers 11 an dem Werkzeugflansch eines Roboterarms 2 ausgebildet ist. Der Greifer 11 weist außerdem ein Basisglied 14 auf, welches mittels eines ersten Drehgelenks um eine erste Drehachse D1 drehbar am Greifergrundkörper 12 gelagert ist. Der Greifer 11 weist des Weiteren einen ersten Greiferfinger 16.1 auf, der mittels eines zweiten Drehgelenks um eine zweite Drehachse D2, die parallel zur ersten Drehachse D1 ausgerichtet ist, bezüglich des Basisglieds 14 drehbar gelagert ist. Außerdem ist der erste Greiferfinger 16.1 mittels eines dritten Drehgelenks um eine dritte Drehachse D3, die parallel zur ersten Drehachse D1 und zweiten Drehachse D2 ausgerichtet ist, bezüglich eines Zwischenglieds 15 drehbar gelagert. Der Greifer 11 weist darüber hinaus in der gezeigten Ausführungsform zwei weitere Greiferfinger 16.2, 16.3 auf, die am Basisglied 14 starr befestigt sind.

Im Falle der Ausführungsbeispiele gemäß Fig. 4 sind die zwei weiteren Greiferfinger 16.2, 16.3 des Greifers 11 als erfindungsgemäß adaptive Greiferfinger ausgebildet und der erste Greiferfinger 16.1 ist ein starrer Greiferfinger. Generell sind jedoch beliebig andere Kombinationen von adaptiven und starren Greiferfingern möglich. Auch kann der Greifer 11 eine andere Anzahl von adaptiven und/oder starren Greiferfingern aufweisen, als in Fig. 4 dargestellt ist.

Der Greifer gemäß Fig.4 weist demgemäß einen Greifergrundkörper 12, wenigstens einen ersten Greiferfinger 16.1 und wenigstens einen zweiten Greiferfinger 16.2, 16.3, sowie ein Getriebe auf, das ausgebildet ist, den wenigstens einen ersten Greiferfinger 16.1 und den wenigstens einen zweiten Greiferfinger 16.2, 16.3 mittels des Basisglieds 14, des Zwischenglieds 15, eines Fingerträgers 17 und den Drehlagern der ersten Drehachse D1, der zweiten Drehachse D2 und der dritte Drehachse D3 relativ zueinander verstellbar am Greifergrundkörper 12 zu lagern.

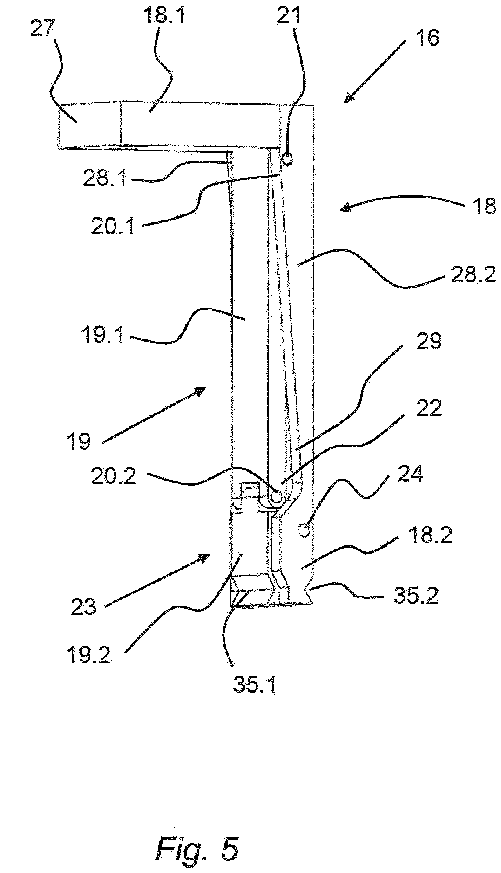

Die Fig. 5 zeigt einen repräsentativen adaptiven Greiferfinger 16. Dieser Greiferfinger 16 weist auf:
- einen Fingergrundkörper 18 mit einem dem Greifergrundkörper 12 zuweisenden Fingerbasisabschnitt 18.1 und einen dem Fingerbasisabschnitt 18.1 gegenüberliegenden Fingerendabschnitt 18.2,
- ein Fingermittelglied 19, das eine erste Greiffläche 19.1, eine erste Lagerstelle 20.1 und eine zweite Lagerstelle 20.2 umfasst, wobei das Fingermittelglied 19 mit seiner ersten Lagestelle 20.1 durch ein erstes Gelenk 21 schwenkbar an dem Fingerbasisabschnitt 18.1 des Fingergrundkörpers 18 gelagert ist,
- ein Fingerspitzenglied 23, das eine zweite Greiffläche 19.2 umfasst, wobei das Fingerspitzenglied 23 an der zweiten Lagestelle 20.2 des Fingermittelglieds 19 durch ein zweites Gelenk 22 schwenkbar an dem Fingermittelglied 19 gelagert ist, und
- ein Widerlager 24 am Fingerendabschnitt 18.2, an dem sich das Fingerspitzenglied 23 derart abstützt, dass das Fingerspitzenglied 23 sich entgegen der Schwenkrichtung des Fingermittelglieds 19 dreht, wenn das Fingermittelglied 19 geschwenkt wird.

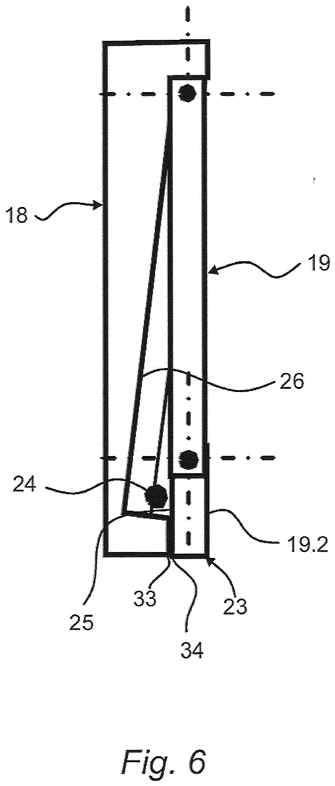

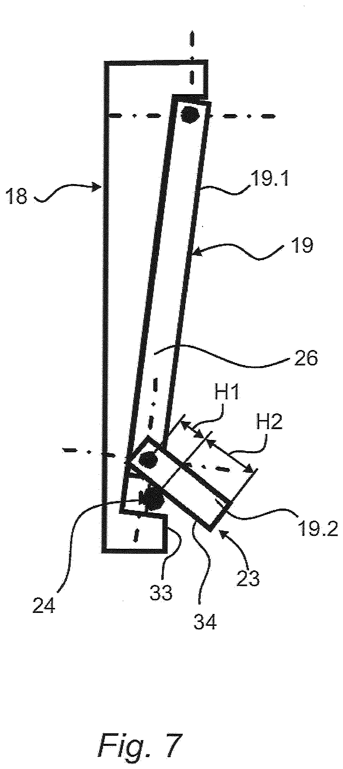

Das Widerlager 24 kann eine Kippleiste aufweisen, an der sich ein der zweiten Greiffläche 19.2 gegenüberliegender Wandabschnitt 25 des Fingerspitzenglieds 23 derart anlegt, dass das Fingerspitzenglied 23 sich aufgrund der Kippleiste um eine Kippachse dreht und gleitet, wenn das Fingermittelglied 19 geschwenkt wird. Eine solche Schwenkbewegung wird durch die Fig. 6 und die Fig. 7 veranschaulicht, wobei diese beiden Figuren die beiden Endlagen des Fingermittelglieds 19 und des Fingerspitzenglieds 23 zeigen, nämlich die Fig. 6 eine Grundstellung, in welcher die erste Greiffläche 19.1 des Fingermittelglieds 19 und die zweite Greiffläche 19.2 des Fingerspitzenglieds 23 eine gemeinsame ebene Greiffläche bilden, und die Fig. 7 eine Endstellung des maximalen eingeschwenkten Zustands des Fingermittelglieds 19, in welchem das Fingermittelglied 19 an einem Schwenkanschlag 26 des Fingergrundkörpers 18 ansteht.

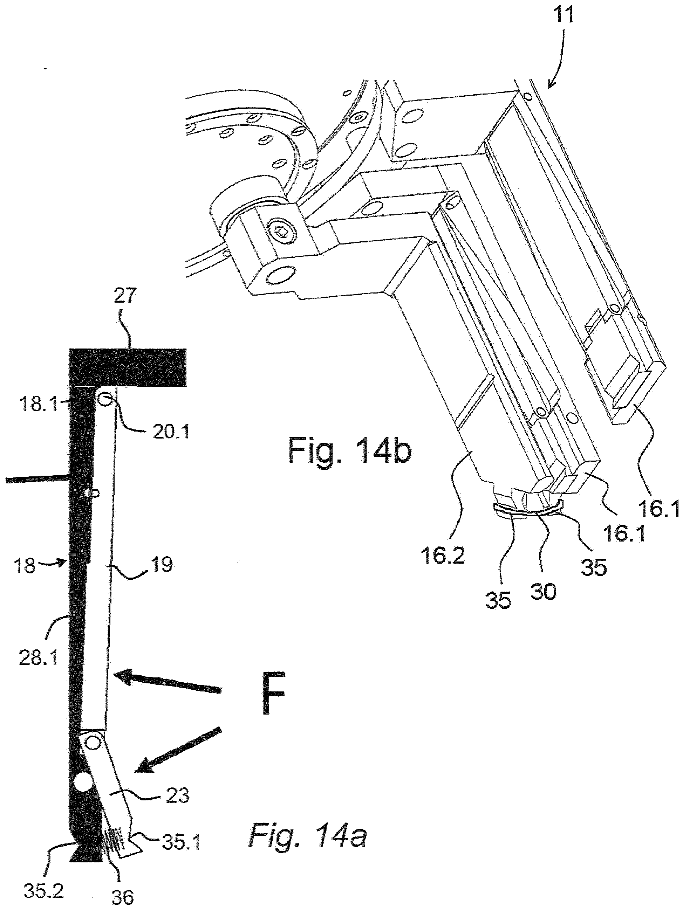

Der Fingergrundkörper 18 kann, wie in Fig. 5 und Fig. 14 gezeigt, eine quaderförmige Grundplatte 27 aufweisen, durch welche der Greiferfinger 16 an dem Greifergrundkörper 12 (Fig. 4) gelagert oder befestigt ist. Die Grundplatte 27 kann Teil des Fingerbasisabschnitts 18.1 sein und/oder die Grundplatte 27 kann im Bereich des Fingerbasisabschnitts 18.1 befestigt sein. Von der Grundplatte 27 können sich zwei Schenkel 28.1, 28.2 wegerstrecken. Die beiden Schenkel 28.1, 28.2 können jeweils von einer flachen, schmalen Leiste gebildet werden. Die beiden Schenkel 28.1, 28.2 erstrecken sich parallel zueinander in einem Abstand. Der Abstand bestimmt sich aus der Breite des Fingermittelglieds 19, derart, dass das Fingermittelglied 19 an seinen gegenüberliegenden Seiten von den beiden Schenkeln 28.1, 28.2 bündig angrenzend eingefasst wird, wie dies insbesondere in Fig. 4 und Fig. 5 dargestellt ist. Der Fingerbasisabschnitt 18.1 kann insoweit von den beiden proximalen, d.h. von den Greifergrundkörper 12 nahen Enden der beiden Schenkel 28.1, 28.2 gebildet werden. Jedes dieser beiden Enden kann beispielsweise eine Bohrung aufweisen, durch welche Bohrungen ein Stift oder eine Achse gesteckt ist, welche die erste Lagerstelle 20.1 für das Fingermittelglied 19 bildet, derart, dass das Fingermittelglied 19 zwischen den beiden Schenkeln 28.1, 28.2 schwenkbar am Fingergrundkörper 18 gelagert ist. Eine solche Schwenkbarkeit des Fingermittelglieds 19 ist insbesondere in Fig. 6 und Fig. 7 veranschaulicht. Jeder Schenkel 28.1, 28.2 kann eine Freisparung 29 aufweisen, so dass in einem maximal eingeschwenktem Zustand des Fingermittelglieds 19 die Ränder der Schenkel 28.1, 28.2 nicht über die Seitenkanten des Fingermittelglieds 19 vorspringen, und somit ein zu greifendes Objekt 30 auch in dem maximal eingeschwenktem Zustand (Fig. 7) des Fingermittelglieds 19 durch die erste Greiffläche 19.1 des Fingermittelglieds 19 gegriffen wird und nicht durch die Schenkel 28.1, 28.2 des Fingergrundkörpers 18.

Das Fingermittelglied 19 kann eine quaderförmige Grundgestalt aufweisen, die in Art einer Leiste ausgebildet ist, derart, dass die erste Greiffläche 19.1 von einer der beiden größtflächigen Seitenwände des Quaders gebildet wird, die erste Lagerstelle 20.1 im Bereich der einen Stirnseite der längsten Längserstreckung des Quaders angeordnet ist, wobei das erste Gelenk 21 mit seiner Schwenkachse parallel zur ersten Greiffläche 19.1 ausgerichtet ist, und die zweite Lagerstelle 20.2 im Bereich der anderen, der einen Stirnseite gegenüberliegenden Stirnseite der längsten Längserstreckung des Quaders angeordnet ist, wobei das zweite Gelenk 22 mit seiner Schwenkachse parallel zur ersten Greiffläche 19.1 ausgerichtet ist.

Das Fingerspitzenglied 23 kann eine quaderförmige Grundgestalt aufweisen, die in Art eines Quadersteins ausgebildet ist, derart, dass die zweite Greiffläche 19.2 von einer der beiden größtflächigen Seitenwände des Quadersteins gebildet wird, der Quadersteins an der zweiten Lagerstelle 20.2 des Fingermittelglieds 19 schwenkbar gelagert ist, wobei das zweite Gelenk 22 mit seiner Schwenkachse parallel zur zweiten Greiffläche 19.2 ausgerichtet ist.

Das Widerlager 24 erstreckt sich parallel zum ersten Gelenk 21 und parallel zum zweiten Gelenk 22 zwischen den beiden Schenkeln 28.1 und 28.2.

Das Widerlager 24, das insbesondere eine Kippleiste, eine Kippkante, ein Kreiszylinderstift eine gewölbte z.B. elliptische Fläche sein kann, ist am Fingergrundkörper 18 in einem solchen Abstand vom zweiten Gelenk 22 angeordnet, dass, wie in Fig. 7 aufgezeigt ist, eine bezüglich der Kippachse in Richtung des zweiten Gelenks 22 weisende erste Hebellänge H1 des Fingerspitzenglieds 23 kleiner ist, als eine von der Kippachse ausgehende zweite Hebellänge H2 des Fingerspitzenglieds 23, die von dem zweiten Gelenk 22 weg weist.

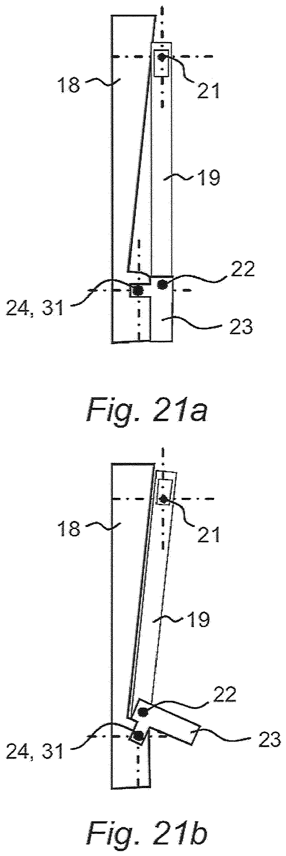

Das Widerlager 24 kann ein beispielhaftes, alternatives, Drehlager 31 (beispielhafte Fig. 21a, Fig. 21b) sein, durch welches das Fingerspitzenglied 23 am Fingergrundkörper 18 schwenkbar gelagert ist und das erste Gelenk 21 kann dabei zwei Freiheitsgrade aufweisen, wie dies beispielhaft in Fig. 21a und Fig. 21b gezeigt ist, und zwar einen Freiheitsgrad in Art eines Drehgelenks, zur Realisierung der Schwenkbarkeit des Fingermittelglieds 19 an dem Fingergrundkörper 18 und einen zweiten Freiheitsgrad in Art eines Schiebelagers, zum Ausgleich der Verstellung des zweiten Gelenks 22 aufgrund der Drehung des Fingerspitzenglieds 23 um das Widerlager 24. Dabei weist das zweite Gelenk 22 nur einen Freiheitsgrad auf.

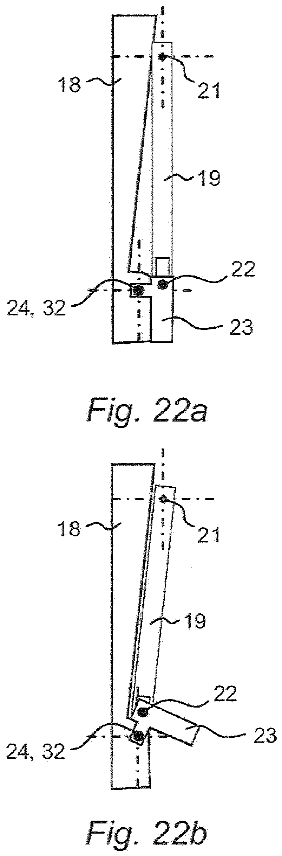

Alternativ kann das Widerlager 24 ein beispielhaftes, alternatives Drehlager 32 (beispielhafte Fig. 22a, Fig. 22b) sein, durch welches das Fingerspitzenglied 23 am Fingergrundkörper 18 schwenkbar gelagert ist und das zweite Gelenk 22 zwei Freiheitsgrade aufweisen, wie dies beispielhaft in Fig. 22a und Fig. 22b gezeigt ist, und zwar einen Freiheitsgrad in Art eines Drehgelenks, zur Realisierung der Schwenkbarkeit des Fingerspitzenglieds 23 an dem Fingermittelglied 19 und einen zweiten Freiheitsgrad in Art eines Schiebelagers, zum Ausgleich der Verstellung des zweiten Gelenks 22 aufgrund der Drehung des Fingerspitzenglieds 23 um das Widerlager 24. Dabei weist das erste Gelenk 21 nur einen Freiheitsgrad auf.

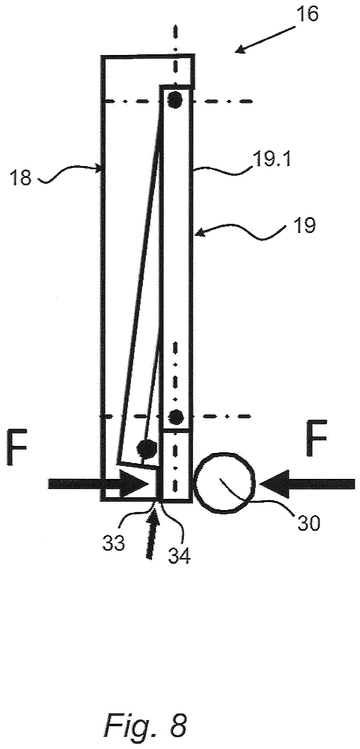

Generell kann der Fingergrundkörper 18 eine Anlagefläche 33 aufweisen, die am Fingergrundkörper 18 derart angeordnet und ausgerichtet ist, dass ein der zweiten Greiffläche 19.2 gegenüberliegender Wandabschnitt 34 des Fingerspitzenglieds 23 auf der Anlagefläche 33 aufliegt, wenn das Fingerspitzenglied 23 zu dem Fingermittelglied 19 derart ausgerichtet ist, dass die erste Greiffläche 19.1 und die zweite Greiffläche 19.2 sich in einer gemeinsamen Ebene erstrecken, wie dies insbesondere in Fig. 6 bis Fig. 9 dargestellt ist. Weiterhin kann das Fingerspitzenglied 23 an der Anlagefläche 33 aufliegen, wenn das Fingerspitzenglied 23 mit einer Greifkraft unterhalb der Berührungskante zur Kippleiste beaufschlagt wird, was eine Gegenkraft der Anlagefläche 33 auf die hintere Fläche (Wandabschnitt 34) des Fingerspitzengliedes 23 zur Folge hat. Die Anlagefläche 33 verläuft dabei tangential zur Kippleiste bzw. zu einer Kippkante des Widerlagers 24. Dies bewirkt, dass im Falle einer Griffweise des Objekts 30, bei der das Objekt 30 das Fingerspitzenglied 23 unterhalb der Kippleiste kontaktiert, das Fingerspitzenglied 23, wie bspw. in Fig. 8 dargestellt, in der Nulllage verbleibt. In einer solchen Anordnung muss das Objekt 30 nicht notwendigerweise wie dargestellt eine kreisförmige Querschnittskontur aufweisen, sondern kann bspw. eine rechteckige oder quadratische Querschnittskontur aufweisen.

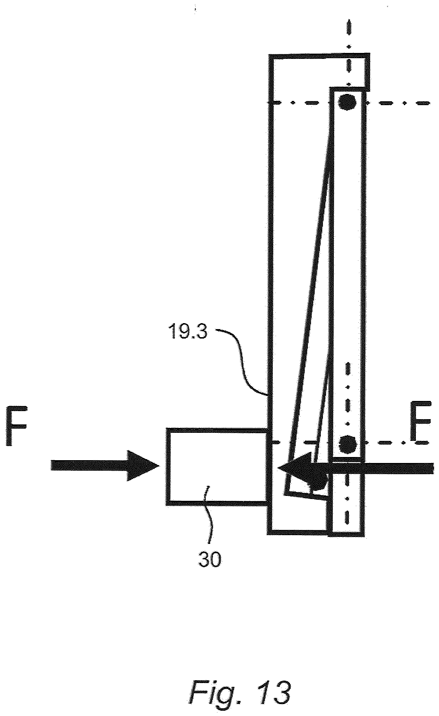

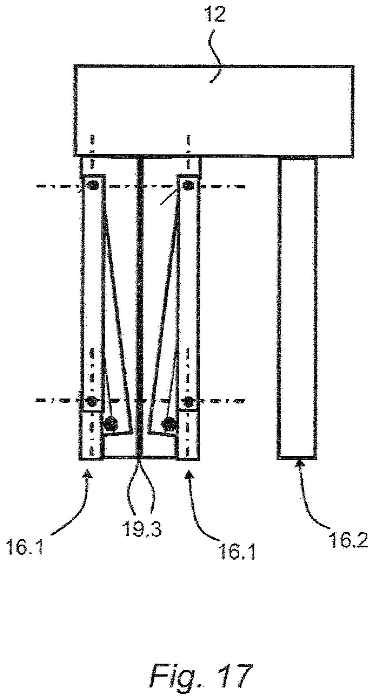

Der Fingergrundkörper 18 weist an einer dem Fingermittelglied 19 gegenüberliegenden Fingergrundkörperaußenwand eine dritte Greiffläche 19.3 auf (Fig. 13, Fig. 17).

Die erfindungsgemäßen Greiferfinger 16 können sich an unterschiedlichste Arten von zu greifenden Objekten 30 anpassen. Zur Veranschaulichung ist der Kontakt lediglich eines einzigen Greiferfingers 16 zum Objekt 30 dargestellt. Um das Objekt 30 jedoch tatsächlich aufnehmen zu können, ist wenigstens ein zweiter Greiferfinger 16 erforderlich, der beispielsweise gegenüberliegend dem ersten Greiferfinger 16 angeordnet sein kann und dort das Objekt 30 in gleicher Weise kontaktiert, wie der erste Greiferfinger 16.

Die Fig. 8 zeigt eine erste Greifsituation bei der ein schmales bzw. dünnes Objekt 30 in einem sogenannten Pinzettengriff aufgenommen wird. Dabei liegt der Kontaktbereich des Objekts an dem Greiferfinger 16 in Höhe der Anlagefläche 33 des Fingergrundkörpers 18, so dass das Fingerspitzenglied 23 mit seinem Wandabschnitt 34 auf der Anlagefläche 33 bündig aufliegt und die erste Greiffläche 19.1 und die zweite Greiffläche 19.2 sich dabei in einer gemeinsamen Ebene erstrecken.

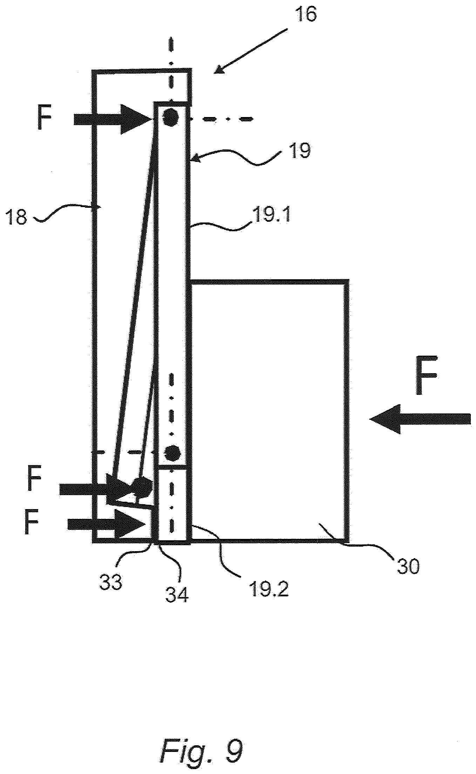

Die Fig. 9 zeigt eine zweite Greifsituation bei der ein großes quaderförmiges Objekt 30 gleichzeitig mit der ersten Greiffläche 19.1 und der zweiten Greiffläche 19.2 gegriffen wird. Auch hierbei liegt das Fingerspitzenglied 23 mit seinem Wandabschnitt 34 auf der Anlagefläche 33 bündig auf und die erste Greiffläche 19.1 und die zweite Greiffläche 19.2 erstrecken sich dabei in einer gemeinsamen Ebene.

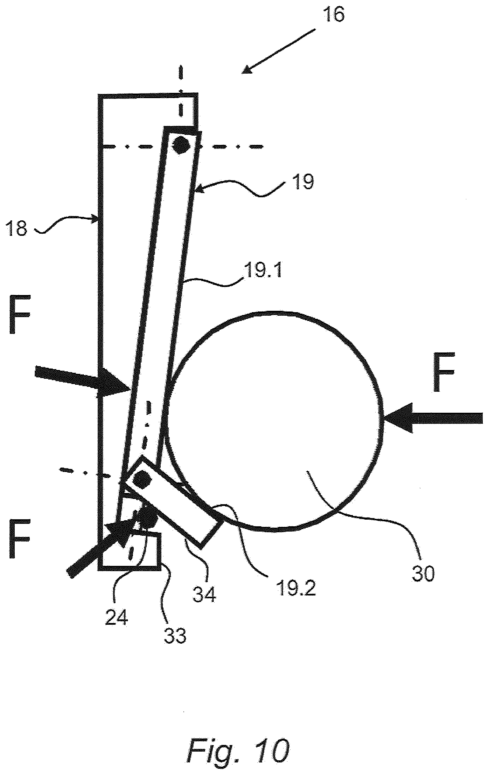

Die Fig. 10 zeigt eine dritte Greifsituation bei der ein großes Objekt 30 mit kreisförmigem Querschnitt, insbesondere ein kreiszylindrisches Objekt 30 gleichzeitig mit der ersten Greiffläche 19.1 und der zweiten Greiffläche 19.2 gegriffen wird. Hierbei schwenkt jedoch das Fingerspitzenglied 23 auf das Objekt 30 zu und das Fingermittelglied 19 schwenkt nach innen in Richtung des Fingergrundkörpers 18, so dass sich insoweit der Greiferfinger 16 formschlüssig um das Objekt 30 legt. Das Fingerspitzenglied 23 schwenkt dabei um das Widerlager 24.

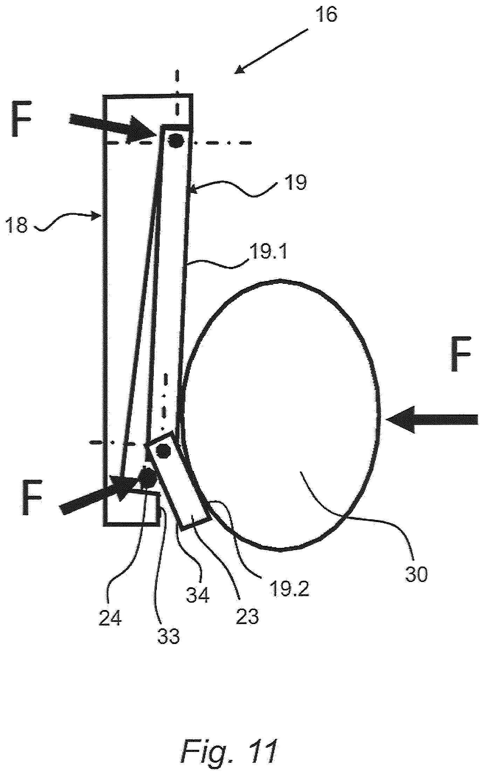

Die Fig. 11 zeigt eine vierte Greifsituation bei der ein großes Objekt 30 mit ovalem Querschnitt gleichzeitig mit der ersten Greiffläche 19.1 und der zweiten Greiffläche 19.2 gegriffen wird. Hierbei schwenkt das Fingerspitzenglied 23 nur geringfügig auf das Objekt 30 zu und das Fingermittelglied 19 schwenkt geringfügig nach innen in Richtung des Fingergrundkörpers 18, so dass sich insoweit der Greiferfinger 16 formschlüssig um das Objekt 30 legt. Das Fingerspitzenglied 23 schwenkt dabei um das Widerlager 24.

In Fig. 11 ist zu erkennen, dass sich das Fingermittelglied 19 und das Fingerspitzenglied 23 an die Oberflächenform des Greifobjektes anpassen, und dabei keinen Anschlag zum Fingergrundkörper 18 berühren. Die dargestellte Greifsituationen ist dennoch eindeutig und statisch bestimmt.

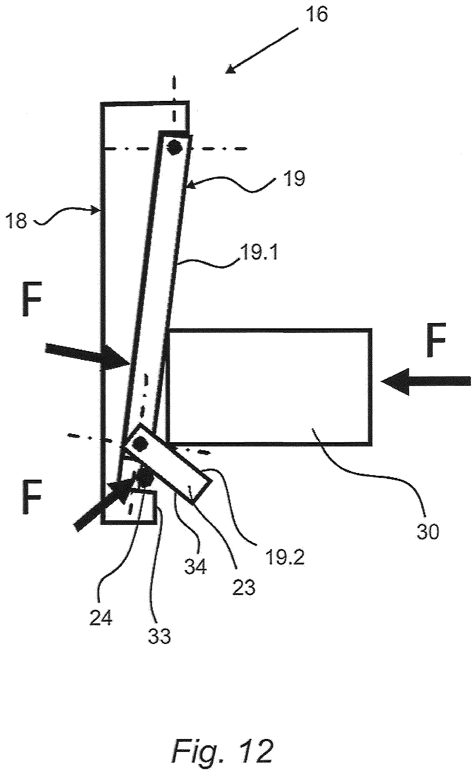

Die Fig. 12 zeigt eine vierte Greifsituation bei der ein schmales quaderförmiges Objekt 30 gleichzeitig mit der ersten Greiffläche 19.1 und der zweiten Greiffläche 19.2 gegriffen wird. Hierbei schwenkt das Fingerspitzenglied 23 auf das Objekt 30 zu und das Fingermittelglied 19 schwenkt nach innen in Richtung des Fingergrundkörpers 18, so dass sich insoweit der Greiferfinger 16 formschlüssig um das Objekt 30 legt. Das Fingerspitzenglied 23 schwenkt dabei um das Widerlager 24.

Die Fig. 13 zeigt eine fünfte Greifsituation bei der das Objekt 30 mit der dritten Greiffläche 19.3 gegriffen wird. Bei dieser Greifsituation kommen das Fingermittelglied 19 und das Fingerspitzenglied 23 nicht zur Anwendung.

Wie insbesondere in Fig. 5 und Fig. 14 dargestellt ist, kann die zweite Greiffläche 19.2 eine Kerbe 35.1 aufweisen, insbesondere eine sich parallel zum ersten Gelenk 21 und parallel zum zweiten Gelenk 22 erstreckende Kerbe 35.1 aufweisen.

Außerdem kann der Fingergrundkörper 18 eine entsprechende Kerbe 35.2 aufweisen. Die Kerbe 35.2 erstreckt sich parallel zum ersten Gelenk 21 und parallel zum zweiten Gelenk 22.

Der Fingergrundkörper 18 weist einen Schwenkanschlag 26 auf, der ausgebildet ist, ein Einschwenken des Fingermittelglieds 19 in Richtung des Fingergrundkörpers 18 auf einen vorgegebenen Höchstschwenkwinkel (Fig. 7) zu begrenzen.

Wie in Fig. 14a dargestellt, kann das Fingerspitzenglied 23 federvorgespannt gelagert sein und zwar federvorgespannt in einer Lage des Fingerspitzenglieds 23, in der das Fingerspitzenglied 23 zu dem Fingermittelglied 19 derart ausgerichtet ist, dass die erste Greiffläche 19.1 und die zweite Greiffläche 19.2 sich in einer gemeinsamen Ebene erstrecken. In der in Fig. 14 gezeigten Stellung des Fingerspitzenglieds 23, ist die dortige Zugfeder 36 auf Zug gespannt, oder in einer Lage, in der sich das Fingerspitzenglied 23 in seiner Nullstellung am Wiederlager 24 befindet.

Wie in Fig. 14b dargestellt, kann der Greifer 11 beispielsweise mit zwei erfindungsgemäß adaptiven ersten Greiferfingern 16.1 und einem zweiten Greiferfinger 16.2 ausgebildet sein, wobei jeweils wenigstens ein adaptiver erster Greiferfinger 16.1 und der zweite Greiferfinger 16.2 einer schräg verlaufende Kerbe 35 aufweist. Jede Kerbe 35 ist im Falle des dargestellten Ausführungsbeispiels in einem 45-Grad Winkel zur Längserstreckung der Greiferfinger 16.1, 16.2 ausgerichtet angeordnet, so dass das Objekt 30, welches im Falle des dargestellten Ausführungsbeispiels ein Ring ist, mit einem schräg im Raum orientierten Greifer 11 aufgenommen bzw. abgelegt werden kann.

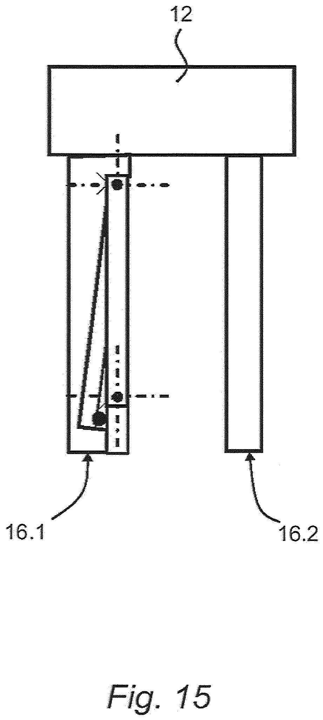

Die Fig. 15 zeigt eine erste Bauart eines Greifers 11, bei dem sich zwei Backen relativ zueinander bewegen können, wobei ein erfindungsgemäß adaptiver erster Greiferfinger 16.1 mit einem starren Greiferfinger 16.2 kombiniert ist, wobei die beiden Greiferfinger 16.1, 16.2 linear gegeneinander verstellbar, insbesondere automatisch angetrieben am Greifergrundkörper 12 gelagert sind.

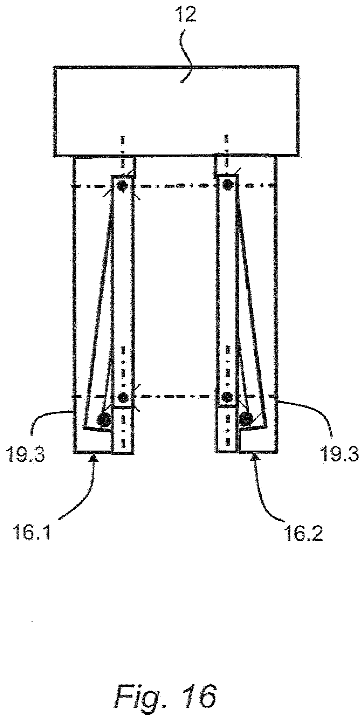

Die Fig. 16 zeigt eine zweite Bauart eines Greifers 11, bei dem zwei erfindungsgemäß adaptiven Greiferfinger 16.1 kombiniert sind, wobei die beiden adaptiven Greiferfinger 16.1 linear gegeneinander verstellbar, insbesondere automatisch angetrieben am Greifergrundkörper 12 gelagert sind.

Die Fig. 17 zeigt eine dritte Bauart eines Greifers 11, bei dem zwei erfindungsgemäß adaptive Greiferfinger 16.1 und ein in sich starrer Greiferfinger 16.2 kombiniert sind, wobei die beiden adaptiven Greiferfinger 16.1 und der starre Greiferfinger 16.2 linear gegeneinander verstellbar, insbesondere automatisch angetrieben am Greifergrundkörper 12 gelagert sind.

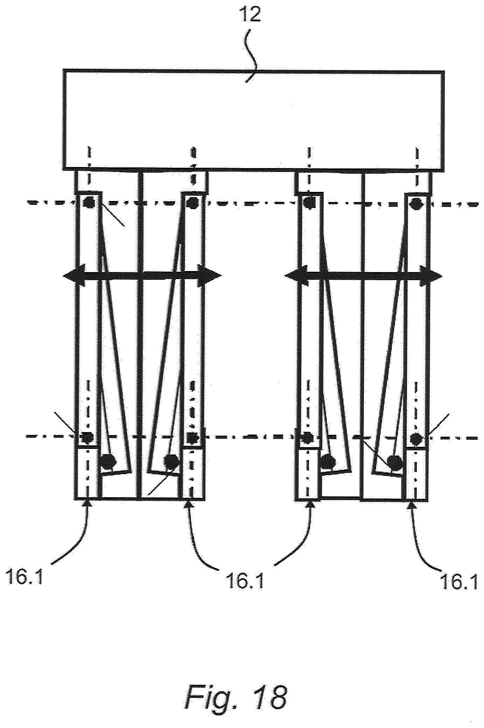

Die Fig. 18 zeigt eine vierte Bauart eines Greifers 11, bei dem zwei Paare von erfindungsgemäß adaptiven Greiferfingern 16.1 kombiniert sind, wobei die beiden Greiferfinger 16.1 jeweils paarweise linear gegeneinander verstellbar, insbesondere automatisch angetrieben am Greifergrundkörper 12 gelagert sind.

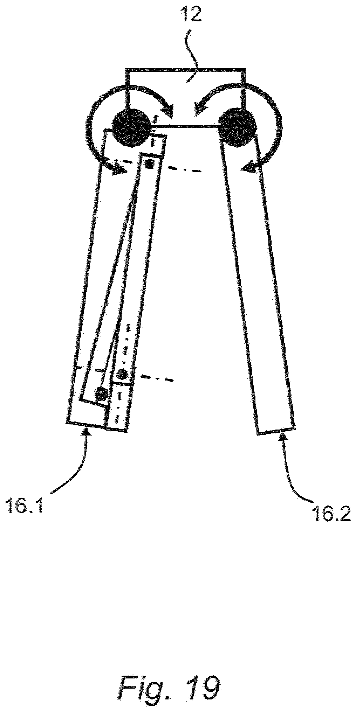

Die Fig. 19 zeigt eine fünfte Bauart eines Greifers 11, bei dem ein erfindungsgemäß adaptiver erster Greiferfinger 16.1 mit einem starren Greiferfinger 16.2 kombiniert ist, wobei die beiden Greiferfinger 16.1, 16.2 um jeweils eine Drehachse schwenkbar gegeneinander verstellbar, insbesondere automatisch angetrieben am Greifergrundkörper 12 gelagert sind.

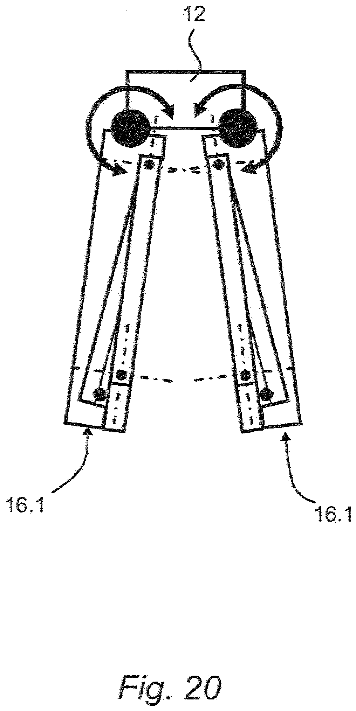

Die Fig. 20 zeigt eine sechste Bauart eines Greifers 11, bei dem zwei erfindungsgemäße adaptive Greiferfinger 16.1 kombiniert sind, wobei die beiden adaptiven Greiferfinger 16.1 um jeweils eine Drehachse schwenkbar gegeneinander verstellbar, insbesondere automatisch angetrieben am Greifergrundkörper 12 gelagert sind.

## Patentansprüche

1. Greifer, aufweisend einen Greifergrundkörper (12), wenigstens einen ersten Greiferfinger (16.1) und wenigstens einen zweiten Greiferfinger (16.2, 16.3), sowie ein Getriebe, das ausgebildet ist, den wenigstens einen ersten Greiferfinger (16.1) und den wenigstens einen zweiten Greiferfinger (16.2) relativ zueinander verstellbar am Greifergrundkörper (12) zu lagern,
wobei mindestens einer der ersten und zweiten Greiferfinger(16, 16.1, 16.2, 16.3):
- einen Fingergrundkörper (18) mit einem dem Greifergrundkörper (12) zuweisenden Fingerbasisabschnitt (18.1) und einem dem Fingerbasisabschnitt (18.1) gegenüberliegenden Fingerendabschnitt (18.2) aufweist,
- ein Fingermittelglied (19) aufweist, das eine erste Greiffläche (19.1), eine erste Lagerstelle (20.1) und eine zweite Lagerstelle (20.2) umfasst, und das Fingermittelglied (19) mit seiner ersten Lagestelle (20.1) durch ein erstes Gelenk (21) schwenkbar an dem Fingerbasisabschnitt (18.1) des Fingergrundkörpers (18) gelagert ist,
- ein Fingerspitzenglied (23) aufweist, das eine zweite Greiffläche (19.2) umfasst, und das Fingerspitzenglied (23) an der zweiten Lagestelle (20.2) des Fingermittelglieds (19) durch ein zweites Gelenk (22) schwenkbar an dem Fingermittelglied (19) gelagert ist, und
- der Fingerendabschnitt (18.2) ein Widerlager (24) aufweist, an dem sich das Fingerspitzenglied (23) derart abstützt, dass das Fingerspitzenglied (23) sich entgegen der Schwenkrichtung des Fingermittelglieds (19) dreht, wenn das Fingermittelglied (19) geschwenkt wird, **dadurch gekennzeichnet, dass**
das Widerlager (24) eine Kippleiste aufweist, an der sich ein der zweiten Greiffläche (19.2) gegenüberliegender Wandabschnitt des Fingerspitzenglieds (23) derart anlegt, dass das Fingerspitzenglied (23) sich aufgrund der Kippleiste um eine Kippachse dreht, wenn das Fingermittelglied (19) geschwenkt wird.

2. Greifer nach Anspruch 1, **dadurch gekennzeichnet, dass** die Kippleiste eine sich parallel zum ersten Gelenk (21) und parallel zum zweiten Gelenk (22) erstreckende Kippkante aufweist.

3. Greifer nach Anspruch 1, **dadurch gekennzeichnet, dass** die Kippleiste von einem sich parallel zum ersten Gelenk (21) und parallel zum zweiten Gelenk (22) erstreckenden Zylinderstift gebildet wird.

4. Greifer nach einem der Ansprüche 1 bis 3, **dadurch gekennzeichnet, dass** das Fingermittenglied (19) einwertig im ersten Gelenk (21) gelagert ist und das Fingerspitzenglied (23) einwertig am Fingermittenglied (19) gelagert ist und ein sich dadurch ergebender Längenausgleichsbedarf beim Schwenken des Fingermittenglieds (19) durch ein Gleiten des Fingerspitzenglieds (23) an dem Wiederlager (24) erreicht wird.

5. Greifer nach einem der Ansprüche 1 bis 4, **dadurch gekennzeichnet, dass** der Fingergrundkörper (18) eine Anlagefläche (33) aufweist, die am Fingergrundkörper (18) derart angeordnet und ausgerichtet ist, dass ein der zweiten Greiffläche (19.2) gegenüberliegender Wandabschnitt (34) des Fingerspitzenglieds (23) auf der Anlagefläche (33) aufliegt, wenn das Fingerspitzenglied (23) zu dem Fingermittelglied (19) sich in seiner Nullstellung befindet.

6. Greifer nach einem der Ansprüche 1 bis 5, **dadurch gekennzeichnet, dass** der Fingergrundkörper (18) an einer dem Fingermittelglied (19) gegenüberliegenden Fingergrundkörperaußenwand eine dritte Greiffläche (19.3) aufweist.

7. Greifer nach einem der Ansprüche 1 bis 6, **dadurch gekennzeichnet, dass** die zweite Greiffläche (19.2) eine Kerbe (35.1) aufweist.

8. Greifer nach Anspruch 6, **dadurch gekennzeichnet, dass** der Fingergrundkörper (18) an der dritten Greiffläche (19.3) eine Kerbe (35.2) aufweist.

9. Greifer nach einem der Ansprüche 1 bis 8, **dadurch gekennzeichnet, dass** das Fingermittelglied (19) und das Fingerspitzenglied (23) unter Bildung eines einzigen passiven Freiheitsgrades an dem Fingergrundkörper (18) gelagert sind und der Greifer (11) ausgebildet ist, ein Schwenken des Fingermittelglieds (19) und/oder des Fingerspitzenglieds (23) derart zu begrenzen, dass in einer Stellung des Fingermittelglieds (19) und/oder des Fingerspitzenglieds (23), in der ein Objekt durch den Greifer (11) gegriffen ist, der einzige passive Freiheitsgrad beseitigt und/oder festgelegt ist.

10. Greifer nach einem der Ansprüche 1 bis 9, **dadurch gekennzeichnet, dass** der Fingergrundkörper (18) einen Schwenkanschlag (26) aufweist, der ausgebildet ist, ein Einschwenken des Fingermittelglieds (19) in Richtung des Fingergrundkörpers (18) auf einen vorgegebenen Höchstschwenkwinkel zu begrenzen.

11. Greifer nach einem der Ansprüche 1 bis 10, **dadurch gekennzeichnet, dass** das Fingerspitzenglied (23) federvorgespannt gelagert ist und zwar federvorgespannt in einer Lage des Fingerspitzenglieds (23), in der das Fingerspitzenglied (23) zu dem Fingermittelglied (19) derart ausgerichtet ist, dass sich das Fingerspitzenglied (23) in seiner Nullstellung befindet.

12. Greifer nach einem der Ansprüche 1 bis 11, **dadurch gekennzeichnet, dass** das Fingermittelglied (19) eine quaderförmige Grundgestalt aufweist, die in Art einer Leiste ausgebildet ist, derart, dass die erste Greiffläche (19.1) von einer der beiden größtflächigen Seitenwände des Quaders gebildet wird, die erste Lagerstelle (20.1) im Bereich der einen Stirnseite der längsten Längserstreckung des Quaders angeordnet ist, wobei das erste Gelenk (21) mit seiner Schwenkachse parallel zur ersten Greiffläche (19.1) ausgerichtet ist, und die zweite Lagerstelle (22) im Bereich der anderen, der einen Stirnseite gegenüberliegenden Stirnseite der längsten Längserstreckung des Quaders angeordnet ist, wobei das zweite Gelenk (22) mit seiner Schwenkachse parallel zur ersten Greiffläche (19.1) ausgerichtet ist.

## Claims

1. Gripper, having a gripper base body (12), at least one first gripper finger (16.1) and at least one second gripper finger (16.2, 16.3), as well as a transmission which is designed to mount the at least one first gripper finger (16.1) and the at least one second gripper finger (16.2) on the gripper base body (12) so as to be adjustable relative to one another,
wherein at least one of said first and second gripper finger (16, 16.1, 16.2, 16.3):
- has a finger base body (18) having a finger base portion (18.1) facing said gripper base body (12) and a finger end portion (18.2) opposite said finger base portion (18.1),
- has a finger middle member (19) which comprises a first gripping surface (19.1), a first bearing point (20.1) and a second bearing point (20.2), and the finger middle member (19) is pivotably mounted with its first position point (20.1) by a first joint (21) on the finger base section (18.1) of the finger base body (18),
- has a fingertip member (23) comprising a second gripping surface (19.2), and the fingertip member (23) is pivotably mounted on the finger middle member (19) at the second location (20.2) of the finger middle member (19) by a second hinge (22), and
- the finger end portion (18.2) comprises an abutment (24) on which the fingertip member (23) is supported such that the fingertip member (23) rotates against the pivoting direction of the finger middle member (19) when the finger middle member (19) is pivoted, **characterized in that**
the abutment (24) has a tilt-bar against which a wall section of the fingertip member (23) opposite the second gripping surface (19.2) bears in such a way that the fingertip member (23) rotates about a tilting axis due to the tilt-bar when the finger middle member (19) is swiveled.

2. Gripper according to claim 1, **characterized in that** the tilt-bar has a tilting edge extending parallel to the first joint (21) and parallel to the second joint (22).

3. Gripper according to claim 1, **characterized in that** the tilt-bar is formed by a cylindrical pin extending parallel to the first joint (21) and parallel to the second joint (22).

4. Gripper according to one of the claims 1 to 3, **characterized in that** the finger middle member (19) is mounted monovalently in the first joint (21) and the fingertip member (23) is mounted monovalently on the finger middle member (19) and a resulting need for length compensation during pivoting of the finger middle member (19) is achieved by sliding the fingertip member (23) on the abutment (24).

5. Gripper according to one of the claims 1 to 4, **characterized in that** the finger base body (18) has a bearing surface (33) which is arranged and aligned on the finger base body (18) in such a way that a wall portion (34) of the fingertip member (23) opposite the second gripping surface (19.2) rests on the bearing surface (33) when the fingertip member (23) is in its zero position with respect to the finger middle member (19) .

6. Gripper according to one of the claims 1 to 5, **characterized in that** the finger base body (18) has a third gripping surface (19.3) on an outer wall of the finger base body opposite the finger middle member (19).

7. Gripper according to one of the claims 1 to 6, **characterized in that** the second gripping surface (19.2) has a notch (35.1).

8. Gripper according to Claim 6, **characterized in that** the finger base body (18) has a notch (35.2) on the third gripping surface (19.3).

9. Gripper according to one of the claims 1 to 8, **characterized in that** the finger middle member (19) and the fingertip member (23) are mounted on the finger base body (18) to form a single passive degree of freedom, and the gripper (11) is formed to limit a pivoting of the finger middle member (19) and/or the fingertip member (23) such that in a position of the finger middle member (19) and/or the fingertip member (23), in which an object is gripped by the gripper (11), the only passive degree of freedom is eliminated and/or fixed.

10. Gripper according to one of the claims 1 to 9, **characterized in that** the finger base body (18) has a pivot stop (26) which is designed to limit a swiveling-in of the finger middle member (19) in the direction of the finger base body (18) to a predetermined maximum pivoting angle.

11. Gripper according to one of the claims 1 to 10, **characterized in that** the fingertip member (23) is mounted spring-biased, in fact spring-biased in a position of the fingertip member (23) in which the fingertip member (23) is aligned with the finger middle member (19) in such a way that the fingertip member (23) is in its zero position.

12. Gripper according to one of the claims 1 to 11, **characterized in that** the finger middle member (19) has a cuboid basic shape, which is formed in the manner of a bar in such a way that the first gripping surface (19.1) is formed by one of the two largest-surface side walls of the cuboid, the first bearing point (20.1) being arranged in the region of one end face of the longest longitudinal extension of the cuboid, the first joint (21) being aligned with its pivot axis parallel to the first gripping surface (19.1), and the second bearing point (22) being arranged in the region of the other, the one end face oppositely end face of the longest longitudinal extension of the cuboid, wherein the second joint (22) being aligned with its pivot axis parallel to the first gripping surface (19.1).

## Revendications

1. Préhenseur comportant un corps de base de préhenseur (12), au moins un premier doigt de préhenseur (16.1) et au moins un second doigt de préhenseur (16.2, 16.3), ainsi qu'une transmission conçue pour monter le au moins un premier le doigt de préhension (16.1) et le au moins un second doigt de préhension (16.2) sur le corps de base de préhenseur (12) de manière à pouvoir être réglés l'un par rapport à l'autre,
dans lequel au moins l'un desdits premier et second doigts de préhension (16, 16.1, 16.2, 16.3):
- un corps de base de doigt (18) ayant une partie de base de doigt (18.1) faisant face audit corps de base de préhenseur (12) et une partie d'extrémité de doigt (18.2) opposée à ladite partie de base de doigt (18.1),
- comporte un partie médian de doigt (19) qui comprend une première surface de préhension (19.1), un premier point d'appui (20.1) et un deuxième point d'appui (20.2), et la partie médian de doigt (19) est monté à pivotement avec sa premier point d'appui (20.1) par une première joint (21) sur la partie de base de doigt (18.1) du corps de base de doigt (18),
- comporte un élément de bout de doigt (23) comprenant une seconde surface de préhension (19.2), et l'élément de bout de doigt (23) est monté de manière pivotante sur la partie médian de doigt (19) au deuxième point d'appui (20.2) de la partie médian de doigt (19) par une seconde charnière (22), et
- la partie d'extrémité de doigt (18.2) comprend une butée (24) sur laquelle repose l'élément de bout de doigt (23) de telle sorte que l'élément de bout de doigt (23) tourne dans le sens de la rotation de la partie médiane du doigt (19) lorsque la partie médiane du doigt (19) est pivoté, **caractérisé en ce que**
la butée (24) présente une barre d'inclinaison contre laquelle s'appuie une partie de paroi du l'élément de bout de doigt (23) opposée à la seconde surface de préhension (19.2), de telle sorte que l'élément de bout de doigt (23) tourne autour d'un axe de basculement dû à la barre d'inclinaison lorsque la partie médiane du doigt (19) est pivotée.

2. Préhenseur selon la revendication 1, **caractérisée en ce que** la barre d'inclinaison a un bord inclinable s'étendant parallèlement au premier joint (21) et parallèle au deuxième joint (22).

3. Préhenseur selon la revendication 1, **caractérisée en ce que** la barre d'inclinaison est formée par une goupille cylindrique s'étendant parallèlement au premier joint (21) et parallèle au deuxième joint (22).

4. Préhenseur selon l'une des revendications 1 à 3, **caractérisée en ce que** la partie médiane du doigt (19) est montée de manière monovalente dans le premier joint (21) et l'élément de bout de doigt (23) est montée de manière monovalente sur la partie médiane du doigt (19) et un besoin de compensation de longueur lors du pivotement de la partie médiane du doigt (19) est obtenu en faisant coulisser l'élément de bout de doigt (23) sur la butée (24).

5. Préhenseur selon l'une des revendications 1 à 4, **caractérisée en ce que** le corps de base de doigt (18) présente une surface d'appui (33) qui est agencée et alignée sur le corps de base de doigt (18) de manière à ce qu'une paroi la partie (34) de l'élément de bout de doigt (23) opposée à la seconde surface de préhension (19.2) repose sur la surface d'appui (33) lorsque l'élément de bout de doigt (23) est dans sa position zéro par rapport à la partie médian de doigt (19).

6. Préhenseur selon l'une des revendications 1 à 5, **caractérisé en ce que** le corps de base de doigt (18) présente une troisième surface de préhension (19.3) sur une paroi extérieure du corps de base de doigt opposée à la partie médiane du doigt (19).

7. Préhenseur selon l'une des revendications 1 à 6, **caractérisée en ce que** la seconde surface de préhension (19.2) présente une encoche (35.1).

8. Préhenseur selon la revendication 6, **caractérisé en ce que** le corps de base de doigt (18) présente une encoche (35.2) sur la troisième surface de préhension (19.3).

9. Préhenseur selon l'une des revendications 1 à 8, **caractérisée en ce que** la partie médiane du doigt (19) et l'élément de bout de doigt (23) sont montées sur le corps de base du doigt (18) pour former un seul degré de liberté passif le préhenseur (11) est formé pour limiter le pivotement de la partie médiane du doigt (19) et / ou de l'élément de bout de doigt (23) de telle sorte que, dans une position de la partie médiane du doigt (19) et / ou de l'élément de bout de doigt (23), dans lequel un objet est saisi par la préhenseur (11), le seul degré de liberté passif est éliminé et / ou fixé.

10. Préhenseur selon l'une des revendications 1 à 9, **caractérisée en ce que** le corps de base de doigt (18) présente une butée de pivotement (26) destinée à limiter le pivotement de la partie médiane de doigt (19) dans la direction de le corps de base de doigt (18) à un angle de pivotement maximum prédéterminé.

11. Préhenseur selon l'une des revendications 1 à 10, **caractérisée en ce que** l'élément de bout de doigt (23) est monté sollicité par ressort, en fait par ressort dans une position du membre l'élément de bout de doigt (23) dans laquelle l'élément de bout de doigt (23) est aligné avec la partie médiane du doigt (19) de telle sorte que l'élément de bout de doigt (23) soit dans sa position zéro.

12. Préhenseur selon l'une des revendications 1 à 11, **caractérisée en ce que** la partie médiane du doigt (19) a une forme de base cuboïde, qui est formée à la manière d'une barre de sorte que la première surface de préhension (19.1) est formé par l'une des deux parois latérales de plus grande surface du cuboïde, le premier point d'appui (20.1) étant disposé dans la région d'une face d'extrémité de la plus longue extension longitudinale du cuboïde, le premier joint (21) étant aligné avec son axe de pivotement est parallèle à la première surface de préhension (19.1), et le deuxième point d'appui (22) étant agencé dans la région de l'autre, l'une des faces étant opposée à l'extrémité du plus long prolongement longitudinal du cuboïde, la deuxième joint (22) étant aligné avec son axe de pivotement parallèle à la première surface de préhension (19.1).
